## Europäisches Patentamt

## European Patent Office

## Office européen des brevets

(19)

(11) Numéro de publication: **0 206 847**
**B1**

(12)

# FASCICULE DE BREVET EUROPEEN

(45) Date de publication du fascicule du brevet:
**22.08.90**

(51) Int. Cl.⁵: **G06F 15/332**

(21) Numéro de dépôt: **86400904.8**

(22) Date de dépôt: **24.04.86**

(54) **Dispositifs de calcul de transformées cosinus, dispositif de codage et dispositif de décodage d'images comportant de tels dispositifs de calcul.**

(30) Priorité: **03.05.85 FR 8506771**

(43) Date de publication de la demande:
**30.12.86 Bulletin 86/52**

(45) Mention de la délivrance du brevet:
**22.08.90 Bulletin 90/34**

(84) Etats contractants désignés:
**AT BE CH DE FR GB IT LI LU NL SE**

(56) Documents cités:
**US-A- 4 385 363**

**IEEE TRANSACTIONS ON ELECTROMAGNETIC COMPATIBILITY, vol.
EMC-24, no. 2, mai 1982, pages 278-286, IEEE, New York, US; A. JALALI et al.: "A high-speed FDCT processor for real-time processing of NTSC color TV signal"**

(73) Titulaire: **THOMSON GRAND PUBLIC, 74, rue du Surmelin, F-75020 Paris(FR)**

(72) Inventeur: **Mischler, Denis, THOMSON-CSF SCPI 19, avenue de Messine, F-75008 Paris(FR)**
Inventeur: **Le Pannerer, Yves-Marie, THOMSON-CSF SCPI 19, avenue de Messine, F-75008 Paris(FR)**

(74) Mandataire: **Turlèque, Clotilde et al, THOMSON-CSF SCPI, F-92045 PARIS LA DEFENSE CEDEX 67(FR)**

**Description**

L'invention concerne des dispositifs de calcul de transformées cosinus, qui sont utilisés notamment pour réaliser le codage et le décodage d'images afin de réduire la quantité des informations représentant ces images.

Il est connu de coder les valeurs représentatives de la luminance et de la couleur des points d'une image par une transformation dite transformation cosinus qui fait correspondre une matrice de N x N valeurs, dites transformées, à une matrice de N x N valeurs représentatives des points d'une portion de l'image à coder. Cette image est découpée en portions carrées constituées chacune d'un bloc de N x N points. Une pondération des valeurs transformées permet de réduire la quantité des informations représentatives d'une image. Le décodage consiste à appliquer une pondération inverse puis une transformation inverse qui fait correspondre une matrice de N x N valeurs transformées inverses à une matrice de N x N transformées directes. Comme le codage, le décodage est réalisé par blocs de N x N points d'images. Si les valeurs représentatives des points d'un bloc sont $f(i,j)$ pour $i = 0$ à $N - 1$ et $j = 0$ à $N - 1$, les valeurs des transformées directes sont données par les formules suivantes:

$$F_b(u,v) = \frac{c(u).c(v)}{N^2} \cdot \sum_{i=0}^{N-1} \cdot \sum_{j=0}^{N-1} f(i,j) \cdot a_{iu} . a_{jv} \qquad (1)$$

pour $u = 0$ à $N - 1$ et $v = 0$ à $N - 1$,

avec $c(u) = \frac{1}{\sqrt{2}}$ pour $u = 0$ et $c(v) = \frac{1}{\sqrt{2}}$ pour $v = 0$

$c(u) = 1$ pour $u = 1, 2, ..., N-1$ et $c(v) = 1$ pour $v = 1, 2, ..., N-1$

$$a_{iu} = \cos\frac{(2i+1).u.\pi}{2N} \quad \text{et } a_{j,v} = \cos\frac{(2j+1).v.\pi}{2N}$$

Les valeurs transformées inverses sont fournies par la transformation cosinus inverse en appliquant les formules suivantes :

$$f(i,j) = \sum_{u=0}^{N-1} \sum_{v=0}^{N-1} c(u) . c(v) F_b(u,v) a_{iu} . a_{jv} \qquad (2)$$

Cette transformation cosinus est une transformation bidimensionnelle qui peut être décomposée en deux transformations cosinus mono-dimensionnelles et le calcul des transformées bi-dimensionnelles peut être réalisé au moyen de deux dispositifs de calcul de transformées mono-dimensionnelles, reliés en cascade. La transformation cosinus monodimensionnelle est réalisée selon les formules suivantes :

pour $k = 0, 1, 2, ..., N - 1$

$$F(k) = \frac{2}{N} c(k) \cdot \sum_{i=0}^{N-1} a_{ik} \cdot f(i) \qquad (3)$$

avec $c(k) = \frac{1}{\sqrt{2}}$ pour $k = 0$

$c(k) = 1$ pour $k = 1, 2, ..., N - 1$

et $a_{ik} = \cos\frac{(2i+1).k.\pi}{2N}$

La transformation cosinus inverse mono-dimensionnelle est réalisée selon les formules suivantes :

pour $i = 0$ à $N - 1$

$$f(i) = \sum_{k=0}^{N-1} b_{ik} \cdot F(k) \qquad (4)$$

$$\text{avec} \quad b_{ik} = c(k) \cdot \cos\frac{(2i+1).k.\pi}{2N} = c(k) \cdot a_{ik}$$

Le codage d'une image par la transformation cosinus suivie d'une pondération permet de réaliser une forte réduction de la quantité d'informations à transmettre mais a pour inconvénient de nécessiter de très nombreux calculs. Cette quantité de calculs est coûteuse en matériel et en temps de calcul. Elle rend très difficile l'application de la transformation cosinus au codage et au décodage d'une suite d'images vidéo à la fréquence habituelle, cinquante trames par seconde dans les standards européens.

Il existe sur le marché des circuits intégrés réalisant les opérations d'addition et de soustraction ou réalisant l'opération de multiplication et d'accumulation. Leurs performances en vitesse et en précision sont limitées. Un procédé connu pour réaliser une grande quantité de calculs à grande vitesse consiste à multiplier le nombre des dispositifs de calcul et à les faire travailler en parallèle. Des dispositifs de calcul de transformées ainsi constitués seraient alors trop coûteux pour être utilisables dans des applications à large diffusion commerciale.

Le document IEEE Transaction on Electromagnetic Compatibility, vol. EMC24, no 2, Mai 1982, page 278–286, IEEE, New-York, USA, décrit un dispositif de calcul de transformées cosinus comportant trois modules, de trois types différents, reliés en série dans un ordre fixé, et couplés entre eux par des mémoires à accès aléatoires ayant pour fonction de modifier l'ordre dans lequel les valeurs intermédiaires sont transmises d'un module au suivant. Chaque module nécessite deux mémoires à accès aléatoire.

Le brevet US-A 4 385 363 décrit un dispositif de calcul de transformées cosinus comportant cinq modules, de deux types différents, reliés en série dans un ordre fixé, et couplés entre eux par des mémoires à accès aléatoire ayant pour fonction de modifier l'ordre dans lequel les valeurs intermédiaires sont transmises d'un module au suivant. Il comporte deux mémoires à accès aléatoire, dans chaque module.

Ces dispositifs connus ont pour inconvénient de comporter de nombreuses mémoires, qui entraînent un coût élevé et des difficultés d'intégration, d'autant plus que les mémoires nécessitent des circuits auxiliaires de gestion des écritures et des lectures.

Le but de l'invention est de réaliser, pour un faible coût, un dispositif de calcul de transformées cosinus mono-dimensionnelles et un dispositif de calcul des transformées cosinus inverses mono-dimensionnelles, puis de réaliser des dispositifs de codage et de décodage appliquant la transformation cosinus bi-dimensionnelle à des images vidéo répondant aux standards de la télévision classique.

L'invention a notamment pour objet des dispositifs de calcul de transformées cosinus mono-dimensionnelles constitués d'un petit nombre de dispositifs de calculs élémentaires qui sont de deux types et qui sont réalisables aux moyens de circuits intégrés disponibles dans le commerce. Ces dispositifs de calcul sont reliés en série dans un ordre variable au cours du temps, grâce à un dispositif de commutation. Le nombre de circuits intégrés est réduit au minimum mais permet de réaliser la fonction de transformation directe ou inverse à un rythme égal au rythme d'analyse des points d'image dans un standard classique de la télévision.

L'invention a aussi pour objet des dispositifs de codage et de décodage d'images par la transformation cosinus bi-dimensionnelle, comportant des dispositfs ainsi constitués.

Selon l'invention, un dispositif de calcul de transformées cosinus mono-dimensionnelles directes, par bloc de N valeurs, N étant égal à 8 ou 16, recevant sur une entrée une suite de valeurs à transformer, avec une valeur f(i) par période constante T0, et fournissant sur une sortie avec la même période T0, une suite de transformées directes,

$$F(k) = \frac{2}{N} \cdot c(k) \sum_{i=0}^{N-1} a_{ik} \cdot f(i) \qquad \text{pour } k = 0 \text{ à } N\text{-}1$$

$$\text{où } c(k) = \frac{1}{\sqrt{2}} \text{ pour } k = 0$$

$$c(k) = 1 \text{ pour } k = 1, 2, \dots, N\text{-}1$$

$$a_{ik} = \cos\frac{(2i+1).k.\pi}{2}$$

et où f(i), pour $i = 0$ à N-1, est un bloc de N valeurs à transformer, est caractérisé en ce qu'il comporte:

— une pluralité de dispositifs de calcul d'un premier type, ayant chacun une entrée d'opérandes recevant des suites de M valeurs $x_i$, pour $i = 0$ à M-1, M étant un nombre entier inférieur ou égal à N, ayant une entrée de commande, ayant M mémoires pour stocker une suite de M valeurs en M périodes successives, et ayant une sortie fournissant des suites de M valeurs $y_j$ pour $j = 0$ à M-1 pendant les M périodes suivantes et telles que: $y_j = x_i + x_k$ ou $y_j = x_i - x_k$ avec i et k compris entre 0 et M-1, en fonction d'une suite de signaux de commande appliqués sur l'entrée de commande; l'entrée du dispositif de calcul de transformées étant reliée à l'entrée d'opérandes d'un dispositif de calcul du premier type;

— une pluralité de dispositifs de calcul d'un second type, ayant chacun une entrée d'opérandes recevant des suites constituées de deux valeurs consécutives $x_1$ et $x_2$ pendant deux périodes consécutives, ayant une entrée de commande, et ayant une sortie fournissant pendant les deux périodes suivantes une suite de valeurs:

$$z_1 = d_1 \cdot x_1 + d_2 \cdot x_2 \text{ et } z_2 = d_3 \cdot x_1 + d_4 \cdot x_2.$$

où $d_1$ à $d_4$ sont des nombres réels prédéterminés et fonctions d'une suite de signaux de commande appliqués à l'entrée de commande; la sortie du dispositif de calcul de transformées étant reliée à la sortie d'un dispositif de calcul du second type;

— un dispositif de couplage ayant une pluralité d'entrées couplées respectivement aux sorties des dispositifs de calcul, une pluralité de sorties couplées respectivement aux entrées d'opérandes des dispositifs de calcule et ayant une entrée de commande recevant une suite de signaux de commande;

— des moyens de commande fournissant aux entrées de commande des dispositifs de calcul et du dispositif de couplage, des suites de signaux de commande ayant une période $N \cdot T0$, telles que le dispositif de couplage relie tous les dispositifs de calcul en série entre l'entrée et la sortie du dispositif de calcul de transformées, dans un ordre variable tel que chaque valeur de la suite fournie par la sortie du dispositif de calcul de transformées soit égale à:

$$F(k) \text{ pour } k = 0 \text{ à } N-1$$

L'invention sera mieux comprise et d'autres détails apparaîtront à l'aide de la description ci-dessous et des figures l'accompagnant:

- la figure 1 représente un diagramme de calcul des transformées cosinus mono-dimensionnelles directes pour des blocs de quatre valeurs, huit valeurs, ou seize valeurs, selon un procédé connu ;
- les figures 2a, 2b, 2c et 2d représentent des opérations élémentaires qui constituent le diagramme de la figure 1 ;
- la figure 3 représente un autre diagramme de calcul des transformées cosinus mono-dimensionnelles directes pour des blocs de quatre valeurs, huit valeurs, ou seize valeurs ;
- la figure 4 représente un diagramme de calcul déduit de celui de la figure 3 et représentant le calcul des transformées cosinus mono-dimensionnelles inverses pour des blocs de quatre valeurs, huit valeurs, et seize valeurs ;
- les figures 5, 9 et 15 représentent des portions du diagramme de la figure 3 et désignent des dispositifs de calcul auxquels sont attribués les calculs représentés sur la figure 4 ; les figures 5, 9 et 15 correspondant à la transformation cosinus de quatre, huit, et seize valeurs respectivement ;
- les figures 7, 12 et 19 représentent des portions du diagramme de la figure 4 et désignent des dispositifs de calcul auxquels sont attribués les différents calculs à réaliser pour la transformation inverse mono-dimensionnelle de quatre, huit, et seize transformées respectivement ;

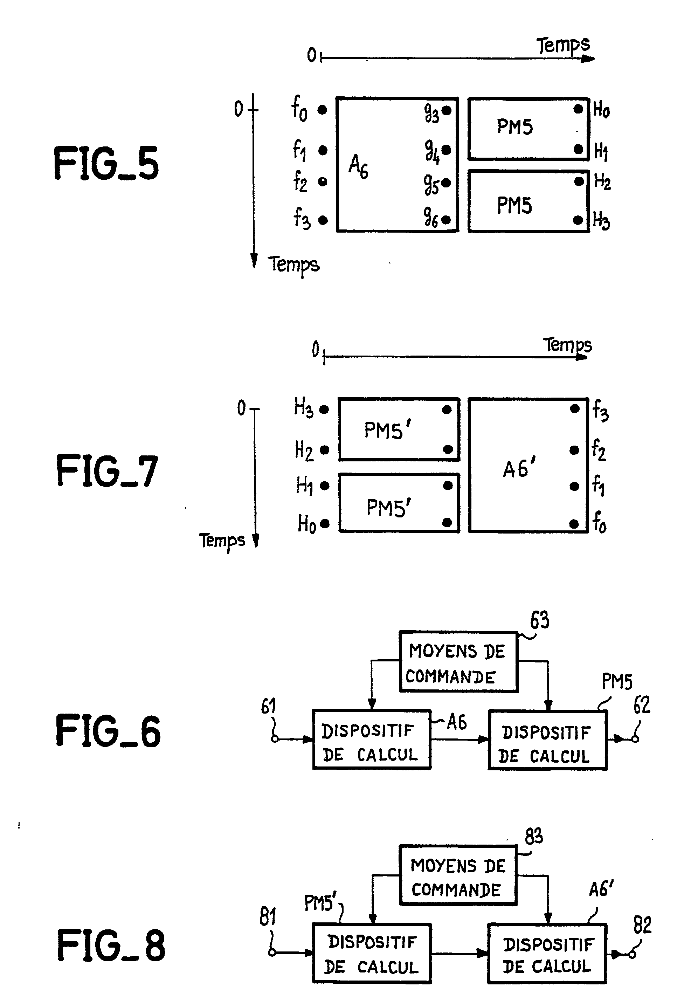

- les figures 6 et 8 représentent les schémas synoptiques d'un exemple de réalisation d'un dispositif de calcul de transformées cosinus directes mono-dimensionnelles et d'un dispositif de calcul de transformées cosinus mono-dimensionnelles inverses, pour des blocs de quatre valeurs ;

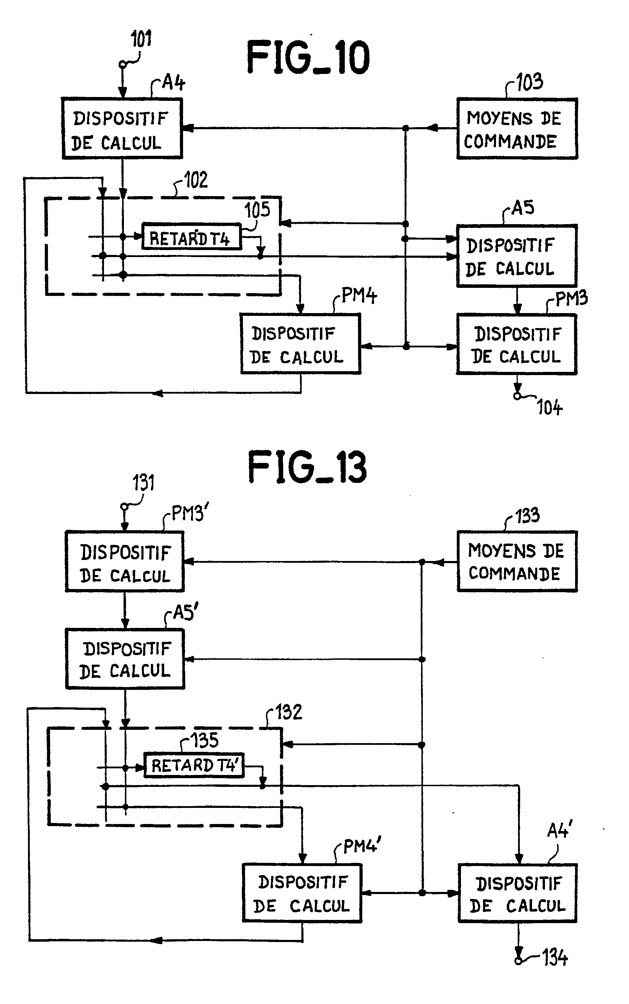

- les figures 10 et 13 représentent les schémas synoptiques d'un exemple de réalisation d'un dispositif de calcul de transformées cosinus directes mono-dimensionnelles, selon l'invention, et d'un exemple de réalisation d'un dispositif de calcul des transformées cosinus mono-dimensionnelles inverses, selon l'invention, pour des blocs de huit valeurs ;

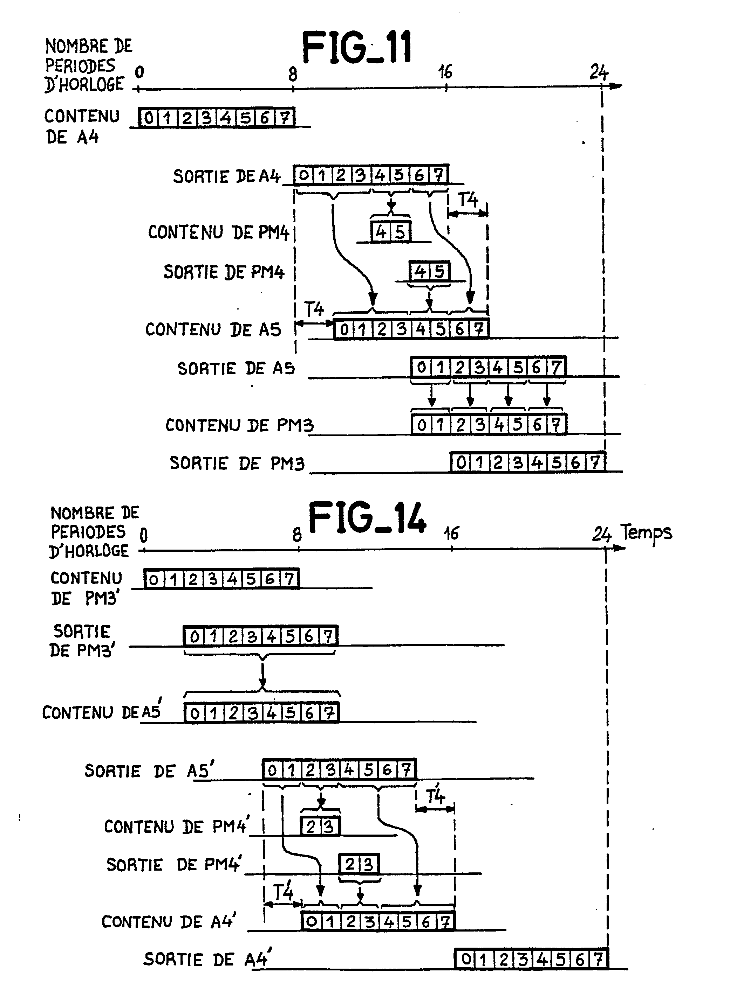

- les figures 11 et 14 représentent des chronogrammes illustrant le fonctionnement des exemples de réalisation de la figure 10 et de la figure 13 ;

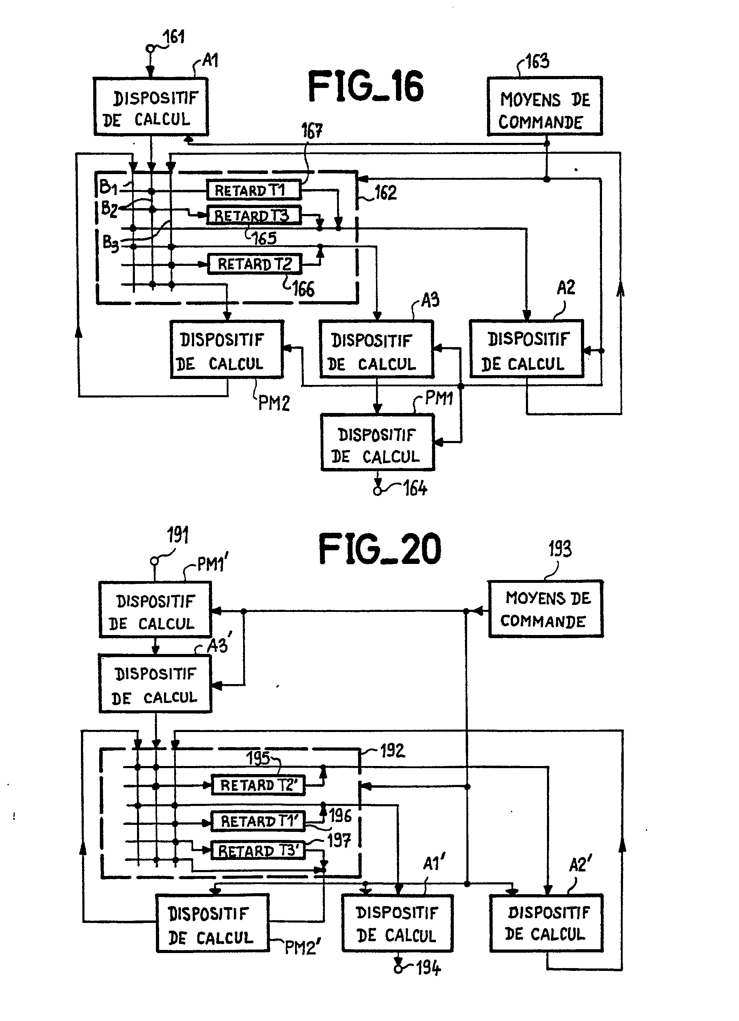

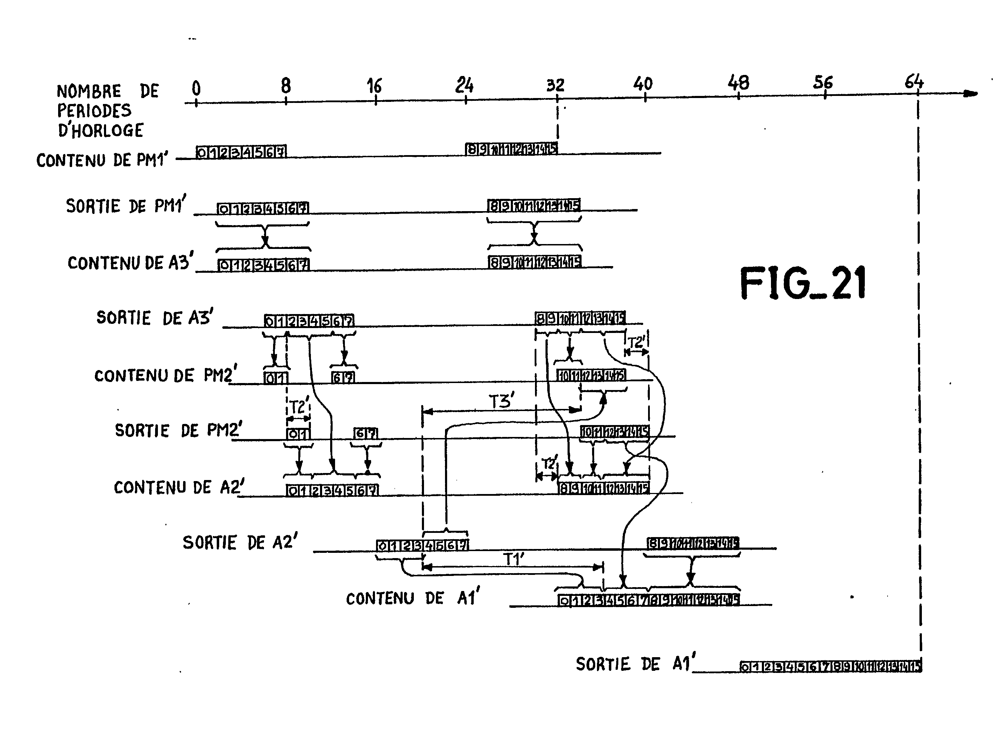

- les figures 16 et 20 représentent les schémas synoptiques d'un exemple de réalisation d'un dispositif de calcul de transformées cosinus directes mono-dimensionnelles, selon l'invention, et d'un exemple de réalisation d'un dispositif de calcul de transformées cosinus mono-dimensionnelles inverses, selon l'invention, pour des trames de seize valeurs ;

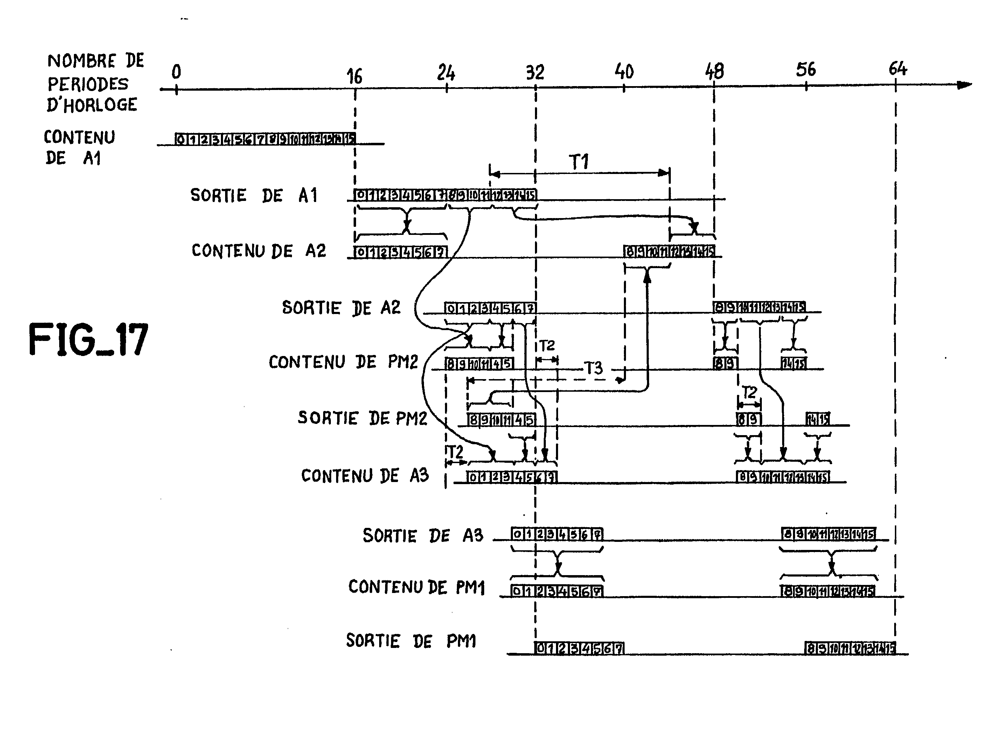

- les figures 17 et 21 représentent des chronogrammes illustrant le fonctionnement des exemples de réalisation des figures 16 et 20 ;

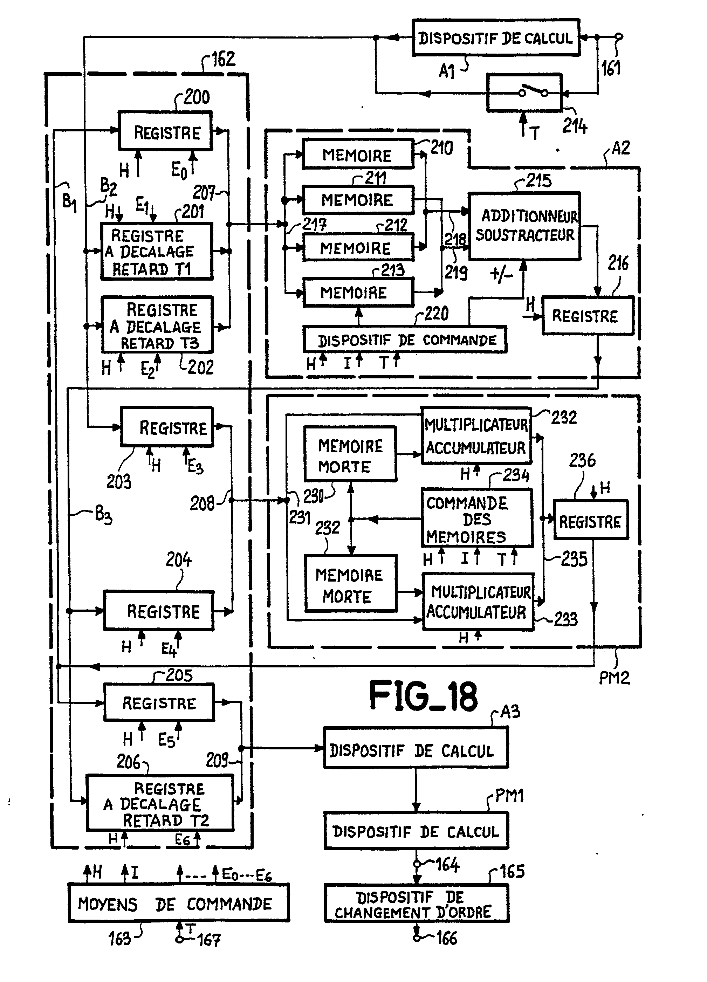

- la figure 18 représente un schéma synoptique plus détaillé de l'exemple de réalisation de la figure 16 ;

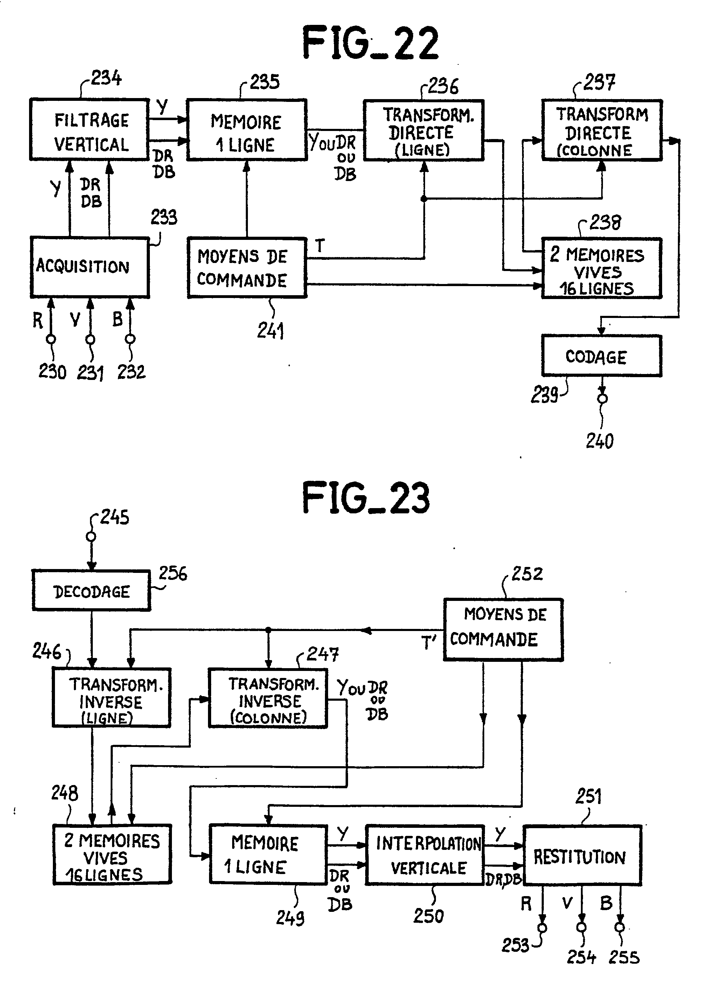

- les figures 22 et 23 représentent les schémas synoptiques d'un exemple de réalisation d'un dispositif de codage d'images, selon l'invention, et d'un exemple de réalisation d'un dispositif de décodage d'images, selon l'invention.

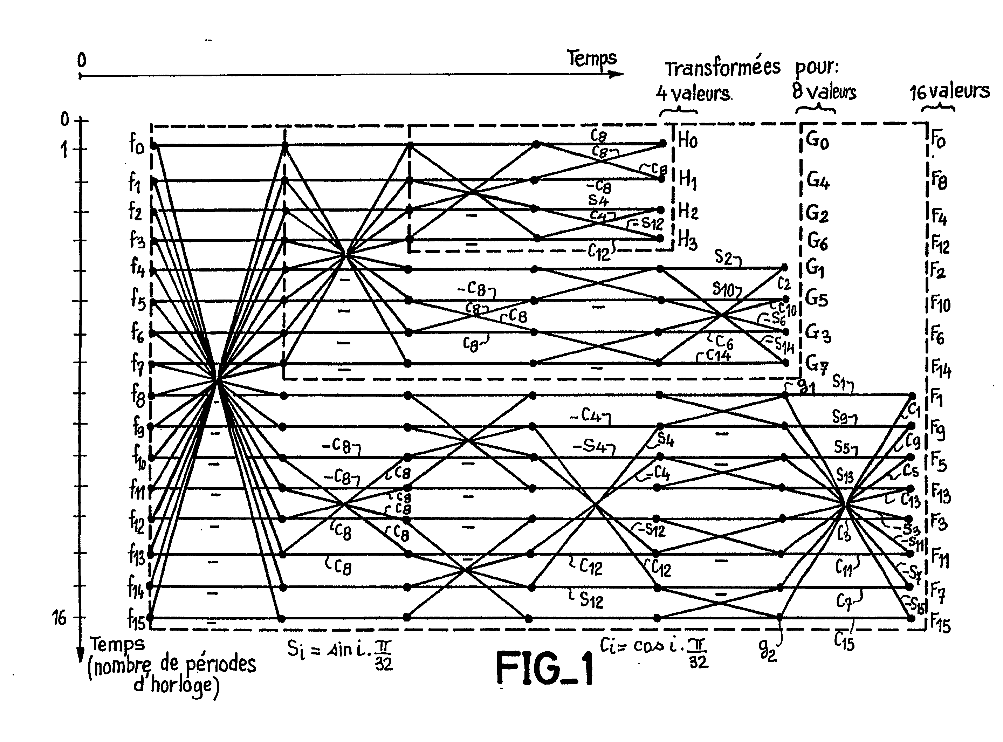

La figure 1 représente d'une manière très condensée une suite de calculs permettant de calculer les transformées cosinus mono-dimensionnelles directes d'un bloc de quatre, ou huit, ou seize valeurs, en un temps réduit. Ce diagramme est donné par R.A. DURYEA dans l'article intitulé "Performance of a source/channel encoded imagery transmission system" Thesis AFIT/GE/EE/79D-12, Air Force Institute of Technology, OHIO décembre 1979. Il est déduit de la formule (3) précitée en mettant à profit les relations mathématiques existant entre les coeffients $a_{ik}$.

Les points de la première colonne à gauche représentent les valeurs à transformer $f_0$ ; ... $f_{15}$ , correspondant à un bloc mono-dimensionnel de seize points d'image. Les points à l'extrême droite du diagramme représentent les valeurs des transformées obtenues à la fin du calcul. Les valeurs $F_0$ , ... , $F_{15}$ sont les transformées du bloc de seize valeurs : $f_0$ , ... , $f_{15}$ . Les valeurs $G_0$ , ... , $G_7$ sont les transformées d'un bloc de huit valeurs : $f_0$ , ... , $f_7$ . Les valeurs $H_0$ , ... , $H_3$ , sont les transformées d'un bloc de quatre valeurs : $f_0$ , ... , $f_4$ . Les calculs correspondants à la transformation d'un bloc de quatre, huit, et seize valeurs sont délimités respectivement par trois rectangles, en pointillés, qui se recouvrent partiellement les uns les autres. Les points qui ne représentent pas les valeurs à transformer ou les valeurs transformées représentent des valeurs intermédiaires et chaque trait entre deux points représente une opération mathématique élémentaire.

Les valeurs constituant chaque bloc à transformer ne sont pas disponibles simultanément mais séquentiellement, dans l'ordre $f_0$ , ... , $f_{15}$ avec une période constante T0 égale à la durée d'analyse de chaque point d'image. Pour comprimer une suite d'images de télévision il est nécessaire que les valeurs transformées soient calculées avec une période égale à la période T0 d'analyse des points d'images. Il est à remarquer que ce diagramme représente une progression des calculs de gauche à droite depuis les valeurs à transformer vers les valeurs transformées et, de haut en bas, depuis les premières valeurs d'un bloc jusqu'aux dernières valeurs de ce bloc. Cependant les mêmes calculs sont tout à fait réalisables dans l'ordre $f_{15}$ à $f_0$ , c'est-à-dire en lisant le diagramme de bas en haut.

Lorsque les calculs sont réalisés dans l'ordre $f_0$ , ... , $f_{15}$ , les valeurs transformées sont obtenues dans l'ordre : $F_0$ , $F_8$ , $F_4$ , $F_{12}$ , $F_2$ , $F_{10}$ , $F_6$ , $F_{14}$ , $F_1$ , $F_9$ , $F_5$ , $F_{13}$ , $F_3$ , $F_{11}$ , $F_7$ , $F_{15}$ , pour la transformation d'un bloc de seize valeurs. Les transformées de huit valeurs sont obtenues dans l'ordre : $G_0$ , $G_4$ , $G_2$ , $G_6$ , $G_1$ , $G_5$ , $G_3$ , $G_7$ . Les transformées d'un bloc de quatre valeurs sont obtenues dans l'ordre : $H_0$ , $H_1$ , $H_2$ , $H_3$ .

Deux traits convergents vers un point représentent une simple addition. Par exemple, le premier point situé dans la seconde colonne à gauche représente la valeur somme de $f_0$ et $f_{15}$ . Lorsqu'un premier trait converge avec un second trait muni du signe "-" la valeur résultante est égale à la différence entre les deux valeurs situées à l'origine de ces traits. Par exemple, le dernier point représenté dans la seconde colonne à gauche représente $f_0 - f_{15}$ .

Lorsque deux traits convergent vers un point en étant accompagnés respectivement de coefficients $d_1$ et $d_3$ et en partant d'une valeur $x_1$ et d'une valeur $x_2$ respectivement, la valeur représentée par le point est égale à la somme $d_1 . x_1 + d_3 . x_2$ . Par exemple, la valeur transformée $F_1$ , qui est représentée par un point en haut de la dernière colonne à droite, est égale à la somme $s_1 . g_1 + c_1 . g_2$ , $g_1$ et $g_2$ étant les valeurs représentées respectivement par le 5$^{ième}$ et le 13$^{ième}$ point de la deuxième colonne à droite. Dans ce diagramme, les coeffients sont représentés d'une manière simplifiée par des symboles de la forme $c_i$ et $s_i$ qui sont égaux à :

$$c_i = \cos \; i . \frac{\pi}{32} \; , \; s_i = \sin \; i . \frac{\pi}{32} \qquad \text{avec } i = 1, ... , 15.$$

Le coeffient de normalisation

$$c(0) = \frac{1}{\sqrt{2}} \; ,$$

qui est dans les formules de transformation mentionnées précédemment, ne figure pas dans le diagramme de calcul.

Le calcul des transformées cosinus mono-dimensionnelles, par blocs de quatre, huit, ou seize valeurs, selon le cheminement représenté par le diagramme de la figure 1 peut être réalisé entièrement au moyen de dispositifs de calcul permettant de réaliser l'addition, la soustraction, la multiplication, et la mémorisation. Il est à remarquer aussi que le calcul des transformées $F_1$ , $F_9$ , $F_5$ , ... , $F_{15}$ passe par cinq colonnes de valeurs intermédiaires qui dépendent des valeurs d'origine $f_0$ , ... , $f_{15}$ par toute une suite de calculs. Le calcul de chaque valeur transformée s'étale donc sur un nombre de périodes T0 très supérieur à seize, il est donc nécessaire de calculer en parallèle les transformées de plusieurs blocs pour obtenir, à la sortie du dispositif de calcul, des transformées au même rythme que celui avec lequel les valeurs d'origine sont appliquées à l'entrée du dispositif de calcul de transformées.

Afin de minimiser le nombre des dispositifs de calcul élémentaires mis en oeuvre, chaque dispositif de calcul élémentaire doit être utilisé dans plusieurs étapes du calcul représenté sur la figure 1. Deux types de dispositifs de calcul élémentaires sont mis en oeuvre dans le dispositif de calcul de transformées selon l'invention : des dispositifs de calcul réalisant la fonction d'addition ou de soustraction ; et des dispositifs de calcul réalisant la fonction de multiplication et accumulation. Ces dispositifs peuvent être réalisés en grande partie au moyen de circuits intégrés additionneurs-soustracteurs du type F 283 fabriqué par FAIRCHILD et au moyen de circuits intégrés multiplicateurs-accumulateurs AM 29510 fabriqués par AMD.

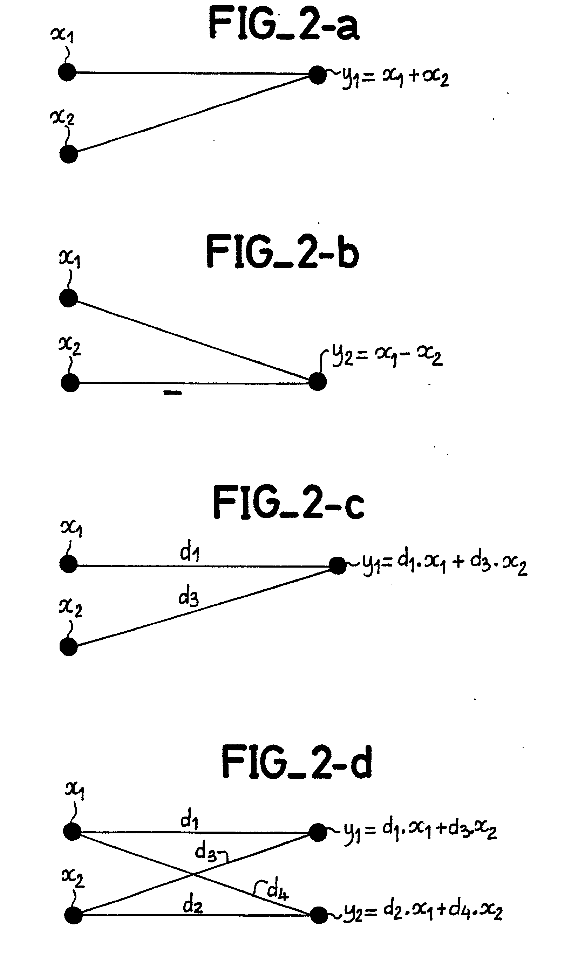

Les figures 2a, b, c, d représentent, avec les mêmes conventions que la figure 1, les opérations élémentaires pouvant être réalisées respectivement par le premier et le second type de dispositifs de calcul élémentaires constituant les dispositifs selon l'invention. Une horloge de période T0 synchronise ces dispositifs.

La figure 2a représente l'addition. Le dispositif fournit une valeur $y_1 = x_1 + x_2$ à partir de deux valeurs $x_1$ et $x_2$ appliquées successivement à une entrée d'opérandes avec un intervalle de temps égal à une ou plusieurs périodes d'horloge. La figure 2b représente l'opération de soustraction, le dispositif fournissant une valeur $y_2 = x_1 - x_2$, $x_1$ et $x_2$ étant deux valeurs appliquées successivement sur l'entrée d'opérandes avec un intervalle de temps égal à une ou plusieurs périodes d'horloge.

En pratique, les dispositifs de calcul élémentaires du premier type sont constitués principalement d'un additionneur-soustracteur et d'une mémoire vive pouvant stocker un nombre prédéterminé de valeurs d'opérandes, par exemple 4. Dans ce cas, pendant quatre premières périodes d'horloge le dispositif stocke quatre valeurs d'opérandes : $x_1$, $x_2$, $x_3$, $x_4$, puis pendant les quatre périodes suivantes il fournit successivement quatre valeurs de résultat. Par exemple :

$$y_1 = x_1 + x_3$$
$$y_2 = x_4 - x_1$$
$$y_3 = x_3 - x_2$$
$$y_4 = x_2 + x_4$$

La mémorisation permet d'attendre que les valeurs $x_1$ et $x_4$, par exemple, soient disponibles pour calculer $y_2 = x_4 - x_1$. Les différentes fonctions de ces dispositifs de calcul sont commandées, par exemple, en comptant le nombre de périodes d'horloge à partir d'un signal d'initialisation. Si N est le nombre de valeurs par bloc, chaque dispositif de calcul élémentaire fonctionne avec une période N.T0.

La figure 2c représente l'opération de multiplication-accumulation réalisable au moyen d'un multiplicateur-accumulateur en rcuit intégré. Un multiplicateur-accumulateur comporte une entrée d'opérandes recevant successivement une valeur $x_1$ puis une valeur $x_2$ avec un intervalle égal à une période d'horloge et comporte une sortie fournissant une valeur $y_1 = d_1 . x_1 + d_3 . x_2$, les coeffients $d_1$ et $d_3$ étant prédéterminés dans le dispositif et étant sélectionnés par un signal logique appliqué à une entrée de commande du dispositif. Par exemple, les valeurs des coeffients peuvent être sélectionnés en comptant le nombre de périodes d'horloge à partir d'un signal d'initialisation. Il est à noter que ce calcul nécessite deux périodes d'horloge en plus des deux périodes nécessaires pour rentrer $x_1$ et $x_2$ car il comporte d'abord deux multiplications, puis une addition des résultats de ces multiplications.

En pratique, les dispositifs de calcul élémentaires du second type sont constitués de deux accumulateurs-multiplicateurs reliés en parallèle et permettant d'obtenir deux valeurs résultats pendant chaque couple de périodes d'horloge.

La figure 2d représente les opérations réalisées par une paire de multiplicateurs-accumulateurs ainsi constituée. L'entrée d'opérandes de ce dispositif de calcul élémentaire du second type reçoit successivement une valeur $x_1$ puis une valeur $x_2$, et une sortie du dispositif de calcul fournit successivement une valeur $y_1 = d_1 . x_1 + d_3 . x_2$ puis une valeur $y_2 = d_2 . x_1 + d_4 . x_2$. Si $x_1$ est appliquée à l'entrée du dispositif pendant une première période d'horloge, et $x_2$ pendant une seconde période d'horloge, la valeur $y_1$ est disponible sur la sortie du dispositif pendant la $3^{ième}$ période d'horloge et $y_2$ est disponible pendant la $4^{ième}$ période d'horloge.

Naturellement, si $x_1$ et $x_2$ ne sont pas disponibles pendant deux périodes d'horloge successives la durée du calcul de $y_1$ et de $y_2$ est rallongée de la durée séparant la disponibilité des valeurs $x_1$ et $x_2$. Ce cas se présente fréquemment dans le calcul représenté sur la figure 1. Par exemple la dernière étape du calcul de la transformée $F_1$ est un calcul de la forme $g_1 . s_1 + g_2 . c_1$, dans lequel $g_1$ et $g_2$ sont deux valeurs séparées dans le temps par huit périodes d'horloge car ces valeurs sont séparées de huit lignes dans le diagramme de la figure 1. Pendant cet intervalle de temps le multiplicateur-accumulateur est en attente, ou tout au moins il doit stocker la première valeur qu'il reçoit : $g_1$, faire d'autres calculs pour ne pas perdre son temps, puis recevoir la seconde valeur : $g_2$, et enfin déterminer le résultat $F_1$.

Cette attente des valeurs des opérandes existe aussi pour les dispositifs de calcul du premier type. Par exemple, sur la figure 1, le première point de la seconde colonne à gauche représente la valeur somme de $f_0$ et de $f_{15}$, qui ne peut être calculée qu'après avoir appliqué $f_0$ puis $f_{15}$ à l'entrée du dispositif de calcul, c'est-à-dire après avoir attendu la valeur $f_{15}$ pendant quinze périodes d'horloge.

Comme il a été mentionné précédemment la fonction mémorisation est prévue dans le premier type de dispositif de calcul. Par contre, cette fonction n'est pas prévue dans le second type de dispositif de calcul. Cette répartition des fonctions entre les deux types de dispositif de calcul est justifiée par le fait que les opérations du type multiplication-accumulation figurant dans ce diagramme de calcul ne portent que sur des couples d'opérandes alors que les opérations du type opération-soustraction portent sur 4, 8 ou 16 valeurs. Les opérateurs du premier type comportent obligatoirement des mémoires pour stocker ces nombreuses valeurs alors que ce n'est pas indispensable pour les opérateurs du second type, à condition de modifier le diagramme de la figure 1 de telle manière que les deux valeurs constituant chaque couple d'opérandes des dispositifs du second type ne soient séparées que d'une période d'horloge.

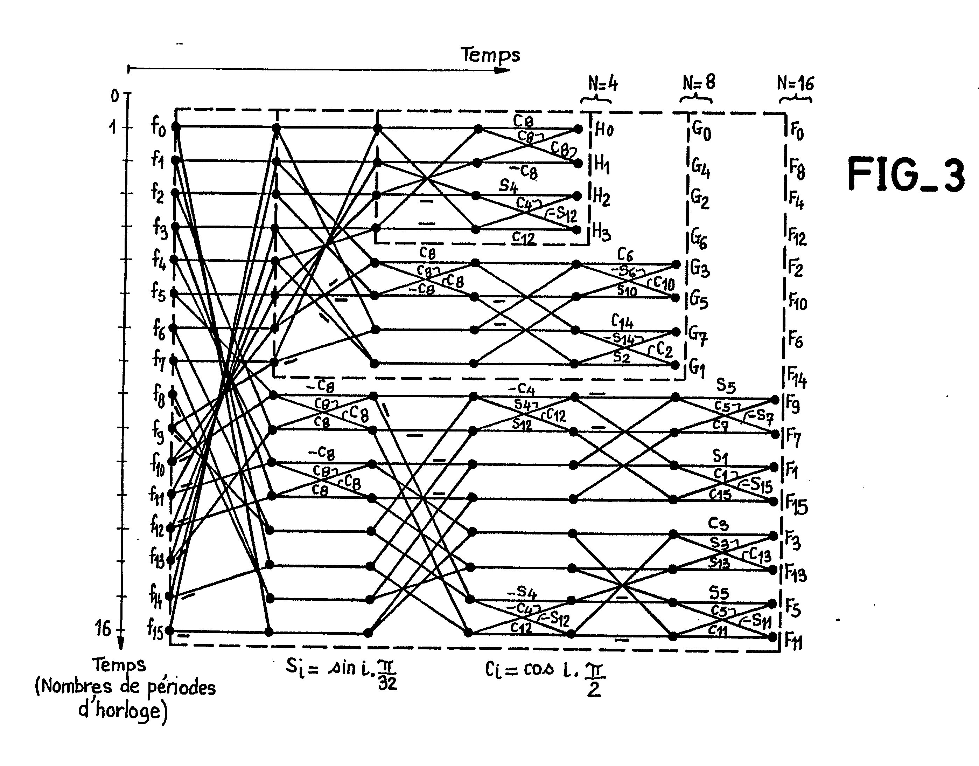

Le diagramme représenté à la figure 3 est déduit de celui de la figure 1 dans ce but. L'absence de mémoires à l'entrée des dispositifs du second type constitue une simplification de ceux-ci et une simplication des moyens pour les commander.

Ayant ainsi défini deux types de dispositifs de calcul élémentaires qui vont constituer les dispositifs de calcul de transformées directes et inverses, il faut ensuite adapter le diagramme des calculs représentés sur la figure 1 pour pouvoir utiliser ces deux types de dispositifs de calcul et attribuer les différentes étapes du calcul à un certain nombre de dispositifs de ces deux types, de façon à mettre en oeuvre un nombre minimum de ces dispositifs de calcul.

L'ordre dans lequel sont disponibles les valeurs intermédiaires du calcul est modifiable à condition de respecter les relations mathématiques liant chaque valeur aux valeurs voisines dans le temps, c'est-à-dire voisines dans le diagramme de la figure 1. Intuitivement cela revient à déplacer les points du diagramme comme s'ils étaient liés entre eux par des fils élastiques. D'autre part, il est envisageable de rajouter quelques dispositifs à retard fixe pour retarder des valeurs intermédiaires. Un retard fixe peut être obtenu d'une façon simple au moyen d'un registre à décalage.

La figure 3 représente un exemple de diagramme de calcul comportant les mêmes calculs et les mêmes valeurs intermédiaires que le diagramme de la figure 1 mais où l'ordre temporel de ces calculs est modifié de telle façon que les dispositifs de calcul du second type reçoivent avec un intervalle égal à une période d'horloge les deux valeurs d'opérandes nécessaires pour chacun des calculs qu'ils effectuent. Les quatre premières lignes du diagramme ne sont pas modifiées car les opérations effectuées par les dispositifs du second type dans ces quatre premières lignes sont situées uniquement dans la dernière colonne à droite et ne posent pas de problèmes.

Sur la figure 1, les opérations situées dans les trois premières colonnes à gauche, en ce qui concerne les quatre premières lignes, ne comportent que des additions-soustractions pour lesquelles il n'y a pas de conditions particulières sur l'ordre des valeurs d'opérandes.

Considérons ensuite les $5^{ième}$, $6^{ième}$, $7^{ième}$ et $8^{ième}$ ligne du diagramme de la figure 1. Il apparaît que des dispositifs de calcul du second type doivent être utilisés pour réaliser des calculs dans la troisième colonne à partir de la gauche et dans la dernière colonne à droite. Dans la troisième colonne, les deux valeurs d'opérandes sont sur deux lignes consécutives, par conséquent ils ne posent pas de problèmes.

Par contre, dans la dernière colonne à droite les valeurs d'opérandes permettant de calculer $G_1$ et $G_7$ sont situées sur la $5^{ième}$ et la $8^{ième}$ ligne et sont donc séparées par trois périodes d'horloge. En remédiant à ce problème il ne faut pas créer un autre problème dans la troisième colonne, il faut donc laisser voisines les lignes de calcul fournissant les valeurs $G_5$ et $G_3$. Comme cela est représenté sur la figure 3, les lignes de calcul conduisant aux valeurs $G_1$ et $G_7$ peuvent être rendues voisines tout en conservant le voisinage des lignes de calcul conduisant aux valeurs $G_3$ et $G_5$. Les transformées obtenues pour des blocs de huit valeurs sont alors dans l'ordre $G_0$, $G_4$, $G_2$, $G_6$, $G_3$, $G_5$, $G_7$, $G_1$. Les points situés sur la $5^{ième}$, sixième, $6^{ième}$, $7^{ième}$ et $8^{ième}$ ligne dans la seconde colonne de points à partir de la gauche ne sont pas déplacés.

Considérons ensuite les huit dernières lignes du diagramme de la figure 1. Des opérations de multiplication-accumulation sont présentes dans la seconde, la quatrième, et la dernière colonne à partir de la gauche. Dans la deuxième colonne, il apparaît que les lignes de calcul conduisant aux valeurs $F_{13}$ et $F_3$ doivent rester voisines, par contre les lignes de calcul conduisant aux valeurs $F_5$ et $F_{11}$ doivent être rendues voisines. Dans la quatrième colonne, il apparaît qu'il faut rendre voisines les lignes de calcul conduisant à $F_5$ et $F_{11}$, et rendre voisines les lignes de calcul conduisant à $F_9$ et $F_7$. Dans la sixième colonne, il apparaît qu'il faut rendre voisines les lignes de calcul conduisant à $F_1$ et à $F_{15}$, rendre voisines les lignes de calcul conduisant à $F_9$ et $F_7$, rendre voisines les lignes de calcul conduisant à $F_5$ et $F_{11}$, et laisser voisines les lignes de calcul conduisant à $F_{13}$ et $F_3$.

En résumant ces conditions, il faut laisser voisines les lignes de calcul conduisant à $F_{13}$ et à $F_3$, et il faut rendre voisines les lignes de calcul conduisant à $F_9$ et $F_7$, les lignes de calcul conduisant à $F_1$ et $F_{15}$, et les lignes de calcul conduisant à $F_5$ et $F_{11}$. C'est ce qui a été réalisé sur le diagramme de la figure 3. Toutes les valeurs intermédiaires ont été déplacées, seules sont restées dans leur ordre d'origine les valeurs à transformer $f_8$, $f_9$, ... , $f_{15}$. Il est à remarquer qu'en respectant les mêmes critères pour modifier le diagramme de la figure 1 il est possible d'aboutir à des diagrammes différents de celui de la figure 3.

L'observation du diagramme de la figure 3 permet de déterminer le nombre minimal de dispositifs de calcul élémentaires nécessaires pour réaliser la transformation cosinus d'un bloc de quatre valeurs, ou d'un bloc de huit valeurs, ou d'un bloc de seize valeurs. Les quatre valeurs à transformer, $f_0$, $f_1$, $f_2$, $f_3$, sont représentées par les quatre premiers points de la troisième colonne de points à partir de la gauche. Pour un bloc de quatre valeurs, il est nécessaire de réaliser quatre opérations du type addition-soustraction portant sur quatre valeurs d'opérandes et il est nécessaire de réaliser deux couples d'opérations du type multiplication-accumulation. Ces opérations de multiplication-accumulation portent sur deux couples d'opérandes qui sont disponibles successivement. D'autre part, il est possible de faire entrer un couple d'opérandes dans une paire de multiplicateurs-accumulateurs pendant les deux périodes d'horloge durant lesquelles cette paire de multiplicateurs-accumulateurs fournit deux résultats successifs déterminés à partir d'un couple d'opérandes précédent. Par conséquent, un seul dispositif de calcul élémentaire du second type permet de réaliser les opérations de multiplication-accumulation nécessaires pour la transformation cosinus directe d'un bloc de quatre valeurs.

Pour la transformation cosinus directe d'un bloc de huit valeurs, les valeurs à transformer, $f_0$ , ... , $f_7$ , sont représentées par les huit premiers points de la seconde colonne de points à partir de la gauche. Il est nécessaire de calculer tout d'abord huit valeurs intermédiaires par huit opérations du type addition-soustraction portant sur deux valeurs prises parmi les huit valeurs à transformer. D'autre part, il est nécessaire de réaliser deux ensembles d'opérations du type addition-soustraction fournissant quatre valeurs intermédiaires calculées à partir de quatre valeurs d'opérandes successives. Pendant la durée de quatre périodes d'horloge, un dispositif de calcul élémentaire du premier type peut simultanément stocker successivement quatre valeurs d'opérandes et fournir successivement quatre valeurs de résultats calculés à partir d'un quadruplet de valeurs d'opérandes ayant été stocké précédemment. Pendant les huit périodes d'horloges correspondant au temps imparti aux calculs des transformées d'un bloc de huit valeurs, un même dispositif de calcul du premier type peut donc réaliser ces deux ensembles d'opérations.

Enfin, il apparaît sur le diagramme de la figure 3 qu'il est nécessaire de réaliser cinq couples d'opérations du type multiplication-accumulation. Pendant la durée de deux périodes d'horloge, une paire de multiplicateurs-accumulateurs peut stocker deux valeurs d'opérandes et simultanément fournir deux résultats successifs. Donc pendant la durée des huit périodes d'horloge impartie au calcul des transformées d'un bloc de huit valeurs, un même dispositif de calcul élémentaire du second type permet de calculer quatre couples de résultats à partir de quatre couples d'opérandes. Dans le cas considéré il y a cinq couples de résultats à calculer, le nombre minimal de dispositifs de calcul élémentaires du second type est donc égal à deux et l'un de ces deux dispositifs ne pourra pas être employé à plein temps.

Pour le calcul des transformées cosinus d'un bloc de seize valeurs, il est nécessaire de réaliser seize opérations du type addition-soustraction portant chacune sur deux valeurs prises parmi les seize valeurs à transformer. Pendant une durée de seize périodes d'horloge, il est possible de stocker seize valeurs d'opérandes et simultanément de fournir sur une sortie seize valeurs de résultats successivement. Donc un premier dispositif de calcul élémentaire du premier type permettant de calculer un résultat à partir de deux opérandes pris parmi seize valeurs successives, est nécessaire et suffisant pour réaliser ces seize opérations et il est occupé à plein temps puisque le le temps imparti pour la transformation d'un bloc de seize valeurs est égal à seize périodes T0.

Sur la figure 3, dans la moitié supérieure de la seconde colonne à partir de la gauche et dans la moitié inférieure de la troisième colonne à partir de la gauche il est nécessaire de réaliser huit opérations du type addition-soustraction fournissant huit résultats successifs calculés à partir de deux opérandes prises parmi huit valeurs successives. Un second dispositif de calcul élémentaire du premier type peut réaliser successivement ces deux ensembles d'opérations et il sera alors occupé à plein temps.

Dans la troisième colonne à partir de la gauche et sur les quatre premières lignes, dans la quatrième colonne à partir de la gauche de la 5$^{ième}$ à la 8$^{ième}$ ligne, et dans la dernière colonne à droite de la 9$^{ième}$ à la 12$^{ième}$ ligne et de la 14$^{ième}$ à la 18$^{ième}$ ligne, il y a quatre ensembles de quatre opérations du type addition-soustraction de deux opérandes pris parmi quatre valeurs. Chacun de ces ensembles d'opérations nécessite quatre périodes d'horloge. Un troisième dispositif de calcul élémentaire peut donc réaliser ces quatre ensembles d'opérations pendant la durée impartie au calcul des transformées d'un bloc de seize valeurs, et ce dispositif de calcul élémentaire sera alors occupé à plein temps.

L'ensemble du calcul des transformées d'un bloc de seize valeurs nécessite treize couples d'opérations du type multiplication-accumulation fournissant deux résultats pour une durée de calcul de deux périodes d'horloge. Un dispositif de calcul élémentaire du second type ne pouvant fournir que huit couples de résultats pendant la durée de 16 périodes d'horloge impartie au calcul des transformées de seize valeurs, le nombre minimal de dispositifs de calcul du second type est donc égal à deux. Mais il y en a au moins un qui ne sera pas employé à plein temps, puisque deux dispositifs du second type peuvent fournir jusqu'à seize couples de résultats pendant seize périodes d'horloge.

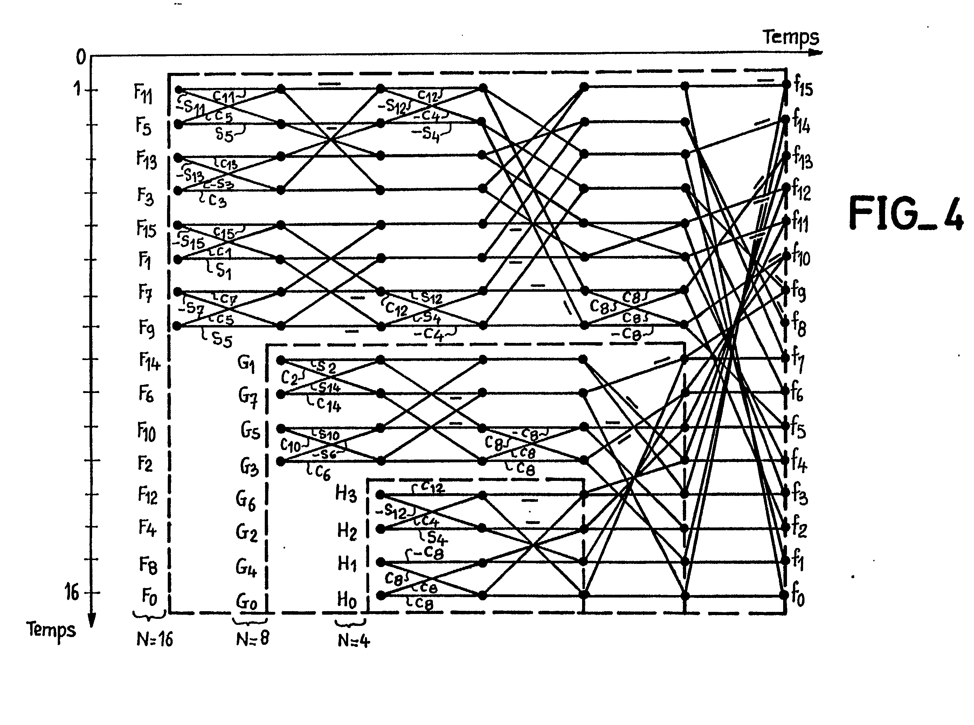

Les calculs nécessaires pour restituer les valeurs d'origine $f_0$ , ... , $f_{15}$ à partir des valeurs transformées peuvent être représentés par le même diagramme que celui de la figure 1 mais en effectuant les calculs dans l'ordre inverse, c'est-à-dire de droite à gauche, en inversant l'axe horizontal des temps. L'ordre des calculs sur l'axe vertical peut être choisi de haut en bas ou de bas en haut, indifféremment. Dans l'exemple considéré, l'axe vertical des temps est inversé lui aussi. Chaque bloc de valeurs transformées directes est présenté dans l'ordre $F_{11}$ , $F_5$ , $F_{13}$ , $F_3$ , $F_{15}$ , $F_1$ , $F_7$ , $F_9$ , $F_{14}$ , $F_6$ , $F_{10}$ , $F_2$ , $F_{12}$ , $F_4$ , $F_8$ , $F_0$ , à l'entrée du dispositif. Le diagramme déduit de la figure 3 pour la transformation inverse est représenté sur la figure 4. Le nombre minimal de dispositifs de calcul élémentaires nécessaires peut être déduit du diagramme de la figure 4, et il est identique à celui déduit du diagramme de la figure 3 pour la transformation directe.

Dans ce qui suit nous décrirons successivement un dispositif de calcul de transformées cosinus directes et un dispositif de calcul de transformées cosinus inverses, successivement pour des blocs mono-dimensionnels de quatre valeurs, huit valeurs, et seize valeurs. Ces dispositifs réalisent des calculs conformément au diagramme de la figure 3 pour la transformation directe et au diagramme de la figure 4 pour la transformation inverse.

La figure 5 représente une fraction du diagramme de la figure 3, qui est délimitée en pointillés sur cette figure 3 et qui correspond aux calculs de la transformation directe pour un bloc de quatre valeurs $f_0$, $f_1$, $f_2$, et $f_3$. Les liaisons entre les points ne sont pas représentées pour plus de clarté. Les rectangles représentés, A6 et PM5, délimitent les calculs attribués à un dispositif de calcul A6 du premier type et à un dispositif de calcul PM5 du second type.

Comme il apparait sur la figure 3 le calcul des transformées pour un bloc de quatre valeurs est très simple : le dispositif de calcul A6 reçoit successivement sur son entrée d'opérandes quatre valeurs, $f_0$, $f_1$, $f_2$, $f_3$, pendant quatre premières périodes d'horloge. Pendant la 5ième, 6ième, 7ième et 8ième période d'horloge la sortie du dispositif A6 fournit quatre valeurs intermédiaires : $g_3$, $g_4$, $g_5$, $g_6$. Pendant la 4ième et 5ième période, $g_3$ et $g_4$ sont appliquées successivement à une entrée d'opérandes du dispositif PM5. Pendant la 7ième et la 8ième période, le dispositif PM5 fournit successivement les valeurs $H_0$ et $H_1$, et reçoit sur son entrée d'opérandes $g_5$ et $g_6$ successivement. Pendant la 9ième et la 10ième période, le dispositif PM5 fournit $H_2$ et $H_3$ successivement. Le dispositif PM5 est alors disponible pour recevoir successivement deux autres valeurs intermédiaires fournies par la sortie du dispositif A6. Le même dispositif de calcul PM5 est donc utilisé deux fois au cours du calcul des transformées d'un bloc.

La durée totale du calcul de quatre transformées est de dix périodes d'horloge. Pour déterminer les transformées au même rythme que celui auquel les valeurs d'origine sont appliquées à l'entrée du dispositif, il est nécessaire de commencer le calcul des transformées des deux prochains blocs dans le dispositif A6 pendant que le calcul des transformées du bloc courant est en cours dans le dispositif PM5. Ainsi trois blocs de quatre valeurs sont appliqués successivement à l'entrée d'opérandes du dispositif A5 pendant une durée de douze périodes. Avec un retard de six périodes, la sortie du dispositif A5 fournit douze transformées pendant une durée de douze périodes.

La figure 6 représente le schéma synoptique d'un exemple de réalisation d'un dispositif de calcul de transformées cosinus mono-dimensionnelles par blocs de quatre valeurs. Ce dispositif comporte une borne d'entrée 61 recevant successivement les valeurs à transformer. Le dispositif de calcul A6 a une entrée d'opérandes reliée à la borne 61 et une sortie reliée en permanence à une entrée du dispositif de calcul PM5. Une sortie du dispositif de calcul PM5 est reliée à une borne de sortie 62 du dispositif de calcul de transformées, fournissant successivement une suite de valeurs transformées.

Des moyens de commande 63 sont reliés à une entrée de commande du dispositif PM5 et à une entrée de commande du dispositif A6 pour leur fournir le signal d'horloge de période T0 et un signal d'initialisation. Les dispositifs A6 et PM5 fonctionnent cycliquement avec une période égale à quatre périodes d'horloge. La réalisation de dispositifs de calcul du premier type et du second type sera décrite plus en détails par la suite.

La figure 7 représente une fraction de la figure 4 représentant les calculs à réaliser pour la transformation cosinus inverse mono-dimensionnelle par bloc de quatre valeurs, et des rectangles représentent l'attribution des calculs à un dispositif de calcul A6' qui est du premier type et un dispositif PM5' qui est du second type.

Pendant une première et une seconde période d'horloge le dispositif PM5' reçoit des transformées directes $H_3$ et $H_2$. Pendant la 3ième et la 4ième période il fournit deux premières valeurs intermédiaires. Pendant cette première et cette quatrième période d'horloge le même dispositif de calcul PM5' reçoit successivement deux autres transformées directes $H_1$ et $H_0$. Pendant la 5ième et la 6ième période d'horloge il fournit une 3ième et une 4ième valeur intermédiaires. Après un délai de quatre périodes d'horloge le dispositif de calcul A6' a reçu successivement sur son entrée d'opérandes quatre valeurs intermédiaires et peut calculer successivement les quatre valeurs de transformées inverses : $f_3$, $f_2$, $f_1$, $f_0$, et les fournir successivement sur sa sortie.

Le calcul de quatre valeurs de transformées inverses dure dix périodes d'horloge. Comme pour la transformation directe, il est possible d'appliquer trois blocs de quatre valeurs successives à l'entrée d'opérandes du dispositif, pendant une durée de douze périodes, puis d'obtenir douze valeurs de transformées inverses à la sortie du dispositif A6' avec un retard de dix périodes et une durée de douze périodes.

La figure 8 représente le schéma synoptique d'un exemple de réalisation d'un dispositif de calcul de transformées cosinus inverses mono-dimensionnelles, par blocs de quatre valeurs, selon l'invention. Dans cet exemple de réalisation une borne d'entrée 81 reçoit une suite de transformées directes et les applique à une entrée d'opérandes du dispositif de calcul PM5'. Une sortie de ce dernier est reliée en permanence à une entrée d'opérandes du dispositif de calcul A6' et une sortie de celui-ci est reliée à une borne de sortie 82 du dispositif de calcul des transformées cosinus et fournit une suite de valeurs de transformées inverses.

Des moyens de commande 83 sont reliés à une entrée de commande du dispositif PM5' et à une entrée de commande du dispositif A6' pour leur fournir le signal d'horloge de période T0 et un signal d'initialisation. Le dispositif A6' et PM5' fonctionnent cycliquement avec une période égale à quatre périodes d'horloge. Ils peuvent être réalisés de manière analogue à celle des dispositifs du premier et du second type qui seront décrits plus loin.

Dans le cas très simple de la transformation directe ou inverse par blocs de quatre valeurs il n'est pas nécessaire de réaliser des commutations pour réutiliser le dispositif de calcul PM5 ou PM5'.

Pour la transformation directe ou inverse de blocs de huit ou seize valeurs, des commutations sont nécessaires pour réutiliser les dispositifs de calcul élémentaires. Ces commutations doivent relier les dispositifs de calcul élémentaires en série entre l'entrée et la sortie du dispositif de calcul de transformées, dans un ordre variable correspondant à l'ordre des calculs représentés sur la figure 3 pour la transformation directe ou correspondant à l'ordre des calculs représentés sur la figure 4 pour la transformation inverse, afin que chaque valeur de la suite fournie par la sortie du dispositif de calcul de transformées soit conforme à la formule (3) ou à la formule (4) respectivement.

Le nombre de dispositifs de calcul nécessaires pour constituer un dispositif de calcul de transformées et la complexité des moyens de couplage réalisant les commutations découlent de la façon avec laquelle chaque étape de calcul est attribuée à l'un des dispositifs de calcul élémentaires. Cette attribution doit donc être faite en respectant les règles suivantes :
- déterminer le nombre minimal, donc optimal, des dispositifs de calcul élémentaires nécessaires, puis attribuer les étapes de calcul à ces dispositifs de telle façon qu'ils soient tous occupés à plein temps, sauf un de chaque type éventuellement ;
- attribuer la première étape de calcul à un même dispositif de calcul élémentaire, pour toutes les valeurs de chaque bloc, pour que l'entrée du dispositif de calcul de transformées soit reliée en permanence à l'entrée d'un unique dispositif de calcul élémentaire ;
- attribuer la dernière étape de calcul à un même dispositif de calcul élémentaire, pour toutes les valeurs transformées correspondant à un bloc, pour que la sortie du dispositif de calcul de transformées soit reliée en permanence à la sortie d'un unique dispositif de calcul élémentaire.

Les dispositifs de calcul de transformées, selon l'invention, constituent la mise en oeuvre de ces trois règles.

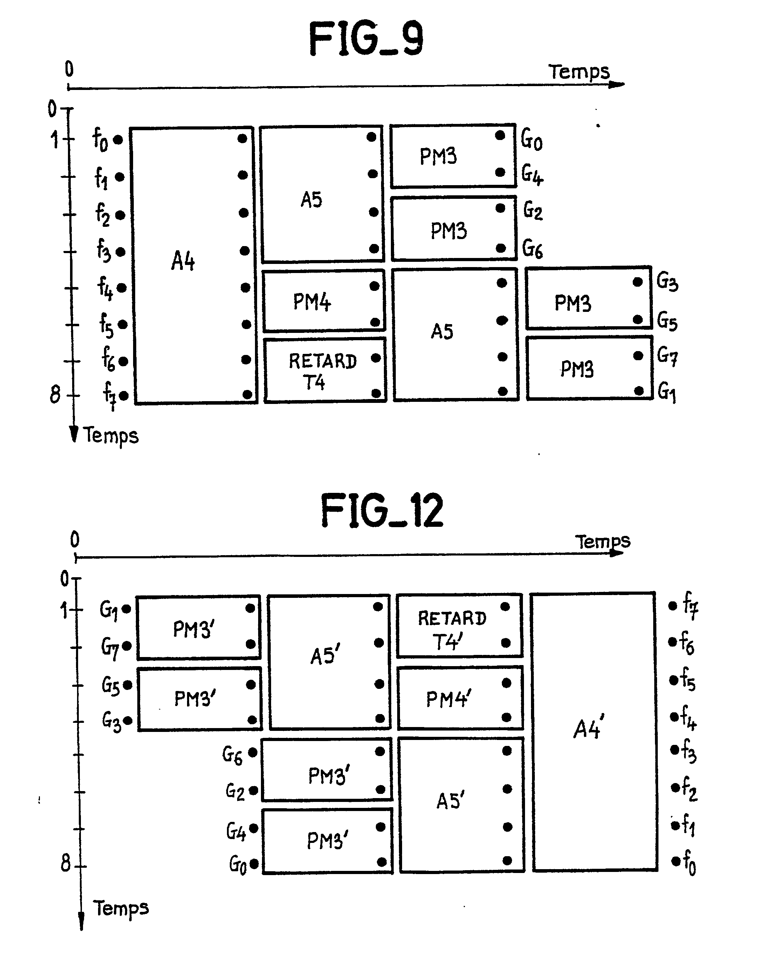

La figure 9 représente une partie du diagramme de la figure 3, correspondant au calcul des transformées par blocs de huit valeurs, partie qui est entourée de pointillés sur la figure 3, et qui est représentée sur la figure 9 sans les liaisons entre les points afin de clarifier la figure. Les rectangles délimitent les calculs attribués à différents dispositifs de calcul élémentaires : A4, A5, PM3, PM4.

Sur la figure 9, la première colonne à gauche correspond à des opérations d'addition et de soustraction qui sont confiées à un dispositif de calcul A4, du premier type, recevant huit valeurs à transformer : $f_0$ , ... , $f_7$ pendant huit périodes d'horloge et fournissant successivement sur une sortie huit valeurs intermédiaires. Les quatre premières valeurs intermédiaires sont appliquées à une entrée d'un dispositif de calcul A5 qui est du premier type, la $5^{ième}$ et la $6^{ième}$ valeur sont appliquées à une entrée du dispositif de calcul PM4, du second type. La $7^{ième}$ et la $8^{ième}$ valeur intermédiaires sont appliquées à une entrée du même dispositif de calcul A5 avec un retard T4 égal à deux périodes d'horloge.

Le retard T4 permet de synchroniser la fourniture, à l'entrée de A5, de la $7^{ième}$ et de la $8^{ième}$ valeur intermédiaires avec la fourniture, à l'entrée de A5 par le dispositif de calcul PM4, de la $5^{ième}$ et de la $6^{ième}$ valeur intermédiaire. Ainsi ces quatre valeurs intermédiaires sont appliquées successivement à l'entrée de A5 en quatre périodes d'horloge. Le dispositif A5 est utilisé une première fois et une seconde fois pour faire deux séries de quatre calculs portant sur quatre valeurs et fournissant quatre valeurs pendant une durée de quatre périodes d'horloge. Ainsi il calcule huit valeurs pendant la durée de huit périodes d'horloge impartie à la transformation d'un bloc de huit valeurs, il est donc occupé à plein temps. Il est nécessaire, dans la réalisation pratique, de réaliser des commutations puisque les valeurs traitées par A5 sont fournies tantôt par le dispositif A4, tantôt par le dispositif PM4.

Les valeurs intermédiaires calculées par le dispositif de calcul A5 sont utilisées dans des calculs du type multiplication-accumulation qui fournissent successivement les valeurs transformées $G_0$ , $G_4$ , $G_2$, $G_6$ , $G_3$ , $G_5$ , $G_7$ , $G_1$ . Ces valeurs intermédiaires sont utilisées par paires successives dans un dispositif de calcul du second type, PM3, qui est utilisé successivement quatre fois. Chaque fois pendant une durée égale à deux périodes d'horloge. Pendant la durée des huit périodes d'horloge correspondant à huit valeurs à transformer, le dispositif PM3 calcule huit valeurs, il est donc occupé à plein temps. Les valeurs intermédiaires utilisées dans les calculs par le dispositif PM3 sont toujours fournies par le dispositif A5, donc la liaison entre le dispositif A5 et le dispositif PM3 est une liaison fixe. Cette répartition des calculs entre PM3 et PM4 est la plus judicieuse puisqu'elle évite de commuter l'entrée de PM3.

La figure 10 représente le schéma synoptique d'un exemple de réalisation d'un dispositif de calcul de transformées cosinus mono-dimensionnelles, par blocs de huit valeurs, selon l'invention. Cet exemple de réalisation comporte : une borne d'entrée 101, recevant une suite de valeurs à transformer ; une borne de sortie 104, fournissant une suite de transformées ; les dispositifs de calcul A4, A5, PM3, PM4 ; un dispositif de couplage 102 ; et des moyens de commande 103.

La borne d'entrée 101 est reliée à une entrée d'opérandes du dispositif de calcul A4. Une sortie du dispositif A4 est reliée à une première entrée du dispositif de couplage 102. Une seconde entrée du dispositif de couplage 102 est reliée à une sortie du dispositif de calcul PM4. Une première et une seconde sortie du dispositif de couplage 102 sont reliées respectivement à une entrée d'opérandes du dispositif de calcul A5 et à une entrée d'opérandes du dispositif de calcul PM4. Une sortie du dispositif de calcul A5 est reliée à une entrée d'opérandes du dispositif de calcul PM3. Une sortie du dispositif de calcul PM3 est reliée à la borne de sortie 104. Les moyens de commande 103 possèdent des sorties reliées respectivement à des entrées de commande de chaque dispositif de calcul A3, A4, PM3, PM4, et et à une entrée de commande du dispositif de couplage 102.

Les moyens de commande 103 commandent chacun des dispositifs de calcul A4, A5, PM3, PM4 en lui fournissant un signal d'initialisation et en lui fournissant un signal d'horloge, de période T0. Ils commandent le dispositif de couplage 102 pour relier la sortie du dispositif de calcul A4 tantôt à l'entrée du dispositif A5, tantôt à l'entrée du dispositif PM4 et pour relier l'entrée du dispositif A5 tantôt à la sortie du dispositif A4 tantôt à la sortie du dispositif PM4. Comme il a été mentionné précédemment les dispositifs de calcul A5 et PM3 sont reliés en série d'une manière fixe.

Le dispositif 102 a une fonction de commutation et une fonction de retard. La fonction de commutation est symbolisée sur la figure 10 par une matrice de commutation constituée de deux conducteurs verticaux reliés respectivement aux deux entrées du dispositif 102 et constituée de trois conducteurs horizontaux. Deux conducteurs horizontaux sont reliés directement aux deux sorties du dispositif 102 et un troisième conducteur horizontal est relié à la première sortie par un dispositif 105 procurant un retard T4. Les liaisons variables réalisées par le dispositif 102 sont symbolisées par des points noirs aux croisements des conducteurs verticaux et des conducteurs horizontaux.

La figure 11 représente un chronogramme illustrant le fonctionnement de cet exemple de réalisation pour la transformation d'un bloc de huit valeurs appelé bloc courant, et ce diagramme permettra ultérieurement d'illustrer aussi le fonctionnement de cet exemple de réalisation pour le bloc précédent et pour le bloc suivant. Pendant huit premières périodes d'horloge le dispositif A4 reçoit successivement sur une entrée les huit valeurs à transformer. Ces valeurs sont repérées sur la figure 11 simplement par un numéro d'ordre de 0 à 7. Le dispositif A4 calcule successivement huit valeurs intermédiaires qu'il fournit pendant les huit périodes suivantes. Ces valeurs intermédiaires sont repérées simplement par leur numéro d'ordre de 0 à 7.

Pendant la durée de la 9$^{ième}$ à la 12$^{ième}$ période d'horloge la sortie du dispositif A4 est reliée à l'entrée du dispositif A5 par le dispositif de couplage 102 afin de charger dans le dispositif A5 les quatre premières valeurs intermédiaires, notées 0, 1, 2, 3, en les retardant d'une durée T4 égale à deux périodes T0 de l'horloge.

Pendant la 13$^{ième}$ et la 14$^{ième}$ période, les valeurs intermédiaires de rang 4 et 5 fournies par la sortie de A4 sont transférées sans retard dans le dispositif PM4 grâce à une commutation du dispositif de couplage 102. Pendant la 15$^{ième}$ et la 16$^{ième}$ période d'horloge la sortie du dispositif PM4 fournit deux nouvelles valeurs intermédiaires, notées 4 et 5, qui sont alors transférées sans retard dans le dispositif A5 par l'intermédiaire du dispositif de couplage 102 qui a été commuté entre temps.

Pendant la 17$^{ième}$ et la 18$^{ième}$ période les valeurs intermédiaires de rangs 6 et 7 fournies par la sortie du dispositif A4 sont transférées elles aussi dans le dispositif A5 par l'intermédiaire du dispositif de couplage 102 dans lequel elles sont retardées d'une durée T4 pour les resynchroniser avec les six premières valeurs intermédiaires déjà stockées dans le dispositif A5.

Les valeurs calculées par le dispositif A5 sont fonction de quatre valeurs d'opérandes. La sortie du dispositif A5 est donc en mesure de fournir des résultats après un retard de quatre périodes, elle fournit donc quatre premières valeurs pendant la durée de la 15$^{ième}$ à la 18$^{ième}$ période puis elle fournit quatre autres valeurs pendant la durée de la 19$^{ième}$ à la 22$^{ième}$ période d'horloge.

Ces résultats sont transférés dans le dispositif de calcul PM3 où ils sont utilisés deux par deux pour calculer huit transformées, dont la première est disponible avec un retard de deux périodes d'horloge par rapport à l'entrée des opérandes dans le dispositif PM3. Finalement, les calculs pour transformer les huit valeurs du bloc courant s'étalent sur vingt-quatre périodes d'horloge.

Il apparaît que les dispositifs A4, A5, et PM3 sont disponibles pendant seize périodes d'horloge sur vingt-quatre, ce qui permet de traiter le bloc courant en parallèle avec un bloc précédant et un bloc suivant. Il est à remarquer que le dispositif PM4 dispose d'encore plus de temps libre puisqu'il n'est employé que pendant la durée de deux périodes d'horloge pour traiter un bloc.

Ce diagramme temporel permet de déterminer les liaisons à établir pendant chaque période d'horloge pour traiter le bloc courant. Ces liaisons sont décrites par le tableau suivant en le lisant de gauche à droite. Par exemple :

A4 - PM4 indique que la sortie de A4 est reliée à l'entrée d'opérandes de PM4.

PM4 - A5 indique que la sortie de PM4 est reliée directement à l'entrée d'opérandes de A5.

A4 - A5(T4) indique que la sortie de A4 est reliée à l'entrée d'opérandes de A5 par l'intermédiaire du dispositif 105 procurant le retard T4.

Tableau n° 1

| nombre de périodes d'horloge | Liaisons à établir pour la transformation du bloc courant (n = 8) |
|---|---|
| 1 | NEANT |
| 2 | |
| 3 | |
| 4 | |
| 5 | |
| 6 | |
| 7 | |
| 8 | |
| 9 | A4–A5(T4) |
| 10 | |
| 11 | |
| 12 | |
| 13 | A4–PM4 |
| 14 | |
| 15 | A4–A5(T4) et PM4–A5 et A5–PM3 |
| 16 | |
| 17 | A5–PM3 |
| 18 | |
| 19 | |
| 20 | |
| 21 | |
| 22 | |
| 23 | NEANT |
| 24 | |

Un diagramme temporel représentant le fonctionnement du dispositif pour le bloc précédent peut être déduit du diagramme de la figure 11 par une translation de huit périodes d'horloge. De même un diagramme temporel représentant le fonctionnement du dispositif pour le bloc suivant peut être déduit par une translation de huit périodes d'horloge dans l'autre sens. Il est possible aussi d'écrire un tableau des liaisons à établir pour la transformation du bloc précédent et un tableau des liaisons à établir pour la transformation du bloc suivant, à partir du tableau n° 1, en réalisant des translations de huit périodes d'horloge. D'autre part, le fonctionnement de chacun des dispositifs de calcul élémentaires ayant une période égale à la durée impartie à la transformation d'un bloc c'est-à-dire huit périodes d'horloge, la récapitulation des liaisons à établir pour la transformation simultanée du bloc courant, du bloc précédent, et du bloc suivant va donner un tableau comportant les mêmes liaisons pour la durée s'étendant de la 1ière à la 8ième période, pour la durée s'étendant de la 9ième à la 16ième période, et pour la durée s'étendant de la 17ième à la 24ième période. Le tableau récapitulant ces liaisons peut donc être simplifié en ne considérant que la durée s'étendant de la 1ière à la 8ième période.

Tableau n° 2

| nombre de périodes d'horloge (modulo 8) | Liaisons à établir pour la transformation du bloc courant, du bloc suivant, et du bloc précédent. |
|---|---|
| 1 | A4–A5(T4)–PM3 |
| 2 | |
| 3 | |
| 4 | |
| 5 | A4–PM4 et A5–PM3 |
| 6 | |
| 7 | A4–A5(T4) et PM4–A5 et A5–PM3 |
| 8 | |

Comme cela était prévisible la liaison entre la sortie du dispositif A5 et l'entrée d'opérandes du dispositif PM3 est une liaison permanente. Les liaisons non permanentes à établir par le dispositif de couplage 102 sont récapitulées dans le tableau suivant :

Tableau n° 3

| nombre de périodes d'horloge (modulo 8) | Liaisons non permanentes à établir pour la transformation du bloc courant, du bloc suivant, et du bloc précédent, la liaison A5–PM3 étant permanente. |
|---|---|
| 1 | A4–A5(T4) |
| 2 | |
| 3 | |
| 4 | |
| 5 | A4–PM4 |
| 6 | |
| 7 | A4–A5(T4) et PM4–A5 |
| 8 | |

Les dispositifs de calcul A4, A5, PM4, PM3, et le dispositif de couplage 102 peuvent être réalisés d'une manière analogue à celle décrite plus loin pour des dispositifs de calcul du premier type, du second type, et des moyens de couplage. Pour certaines applications où il est nécessaire de remettre les valeurs transformées dans l'ordre $F_0$ , ... , $F_7$ , il est à la portée de l'homme de l'art de réaliser un dispositif de changement d'ordre d'un bloc de huit valeurs et de le relier à la borne de sortie 104 du dispositif de calcul des transformées.

Etant donné qu'il existe des variantes du diagramme de la figure 3, il existe aussi des variantes du diagramme de la figure 9, par conséquent il existe des variantes de réalisation du dispositif représenté à la figure 10. Ces variantes portant sur l'ordre de réalisation des calculs, elles correspondent donc à d'autres tableaux des liaisons à établir.

La figure 12 représente une portion du diagramme des calculs représentés à la figure 4 pour déterminer des valeurs transformées inverses $f_0$ , ... , $f_7$ , à partir de transformées $G_1$ , $G_7$ , $G_5$ , $G_3$ , $G_6$ , $G_2$ , $G_4$ , $G_0$ , présentées dans cet ordre. Les rectangles délimitent les calculs qui sont attribués à chacun des dispositifs de calcul élémentaires. Tous les calculs peuvent être réalisés au moyen de deux dispositifs du premier type : A4' et A5', et de deux dispositifs du second type : PM3' et PM4'. Dans la première colonne à gauche le dispositif PM3' réalise une première puis une seconde paire d'opérations de multiplication-accumulation. Dans la seconde colonne à partir de la gauche le dispositif de calcul A5' réalise un premier ensemble de quatre opérations du type addition-soustraction de deux opérandes pris parmi quatre valeurs, puis le dispositif PM3' réalise une troisième et une quatrième paire d'opérations de multiplication-accumulation. Dans la troisième colonne à partir de la gauche deux valeurs intermédiaires sont transmises sans modification mais avec un retard T4' égal à deux périodes d'horloge, puis le dispositif de calcul PM4' réalise une paire d'opérations multiplication-accumulation, et le dispositif A5' réalise un second ensemble de quatre opérations du type addition-soustraction. Dans la dernière colonne à droite le dispositif de calcul A4' réalise huit opérations du type addition-soustraction de deux opérandes pris parmi huit valeurs.

La figure 13 représente le schéma synoptique d'un exemple de réalisation d'un dispositif de calcul de transformées cosinus inverses par blocs de huit valeurs, selon l'invention. Une borne d'entrée 131 reçoit une suite de valeurs à transformer et les applique à une entrée d'opérandes du dispositif de calcul PM3'. Une sortie du dispositif PM3' est reliée en permanence à une entrée d'opérandes du dispositif de calcul A5'. Une borne de sortie 134 constitue la sortie du dispositif de calcul de transformées et est reliée à une sortie du dispositif de calcul A4'.

Un dispositif de couplage 132 possède deux entrées reliées respectivement à une sortie du dispositif de calcul A5' et à une sortie du dispositif de calcul PM4' et possède une première et une seconde sortie reliées respectivement à une entrée d'opérandes du dispositif de calcul PM4' et à une entrée d'opérandes du dispositif de calcul A4'. Le dispositif 132 réalise la fonction de commutation et de retard. Ces fonctions sont symbolisées respectivement par une matrice de commutation comportant deux conducteurs verticaux reliés respectivement aux deux entrées du dispositif 132 et trois conducteurs horizontaux. Deux des conducteurs horizontaux sont reliés directement aux deux sorties du dispositif 132 et un troisième conducteur horizontal est relié à la seconde sortie du dispositif 132 par l'intermédiaire d'un dispositif 135 procurant un retard T4'. Les commutations variables réalisées par le dispositif 132 sont symbolisées par des points noirs à l'intersection des conducteurs verticaux et horizontaux. Des moyens de commande 103 fournissant un signal d'initialisation et un signal d'horloge de période T0 à chacun des dispositifs de calcul PM3', PM4', A4', A5' et fournissant des signaux de commande du dispositif de couplage 132.

La figure 14 représente un chronogramme illustrant le fonctionnement de cet exemple de réalisation. Pendant huit premières périodes d'horloge le dispositif de calcul PM3' reçoit et stocke huit valeurs de transformées qui sont notées par leurs numéros d'ordre 0, ... , 7. De la 3ième à la 10ième période d'horloge la sortie du dispositif PM3' fournit une série de huit valeurs intermédiaires représentées par leurs numéros d'ordre 0, ... , 7, avec un retard de deux périodes par rapport à l'entrée des valeurs de transformées dans ce dispositif. Sitôt qu'elles sont disponibles ces valeurs intermédiaires sont stockées dans le dispositif A5'. Le dispositif A5' stocke les quatre premières valeurs intermédiaires fournies par la sortie de PM3' puis fournit quatre valeurs de résultat, en même temps qu'il stocke quatre autres valeurs intermédiaires fournies par la sortie de PM3' pendant la durée de la 7ième à la 10ième période. Il fournit quatre autres valeurs de résultat pendant la durée de la 11ième à la 14ième période.

Les deux premières valeurs et les quatre dernières valeurs fournies par la sortie du dispositif A5' sont transmises et stockées dans le dispositif A4' par le dispositif de couplage 132 avec un retard T4' égal à deux périodes d'horloge. La troisième et quatrième valeur, notées 2 et 3, sont transmises sans retard au dispositif PM4' par le dispositif de couplage 132 au cours de la 9ième et de la 10ième période. Pendant la 11ième et la 12ième période la sortie du dispositif PM4' fournit deux valeurs de résultat qui sont transmises sans retard à l'entrée du dispositif A4' par le dispositif de couplage 132. Comme il apparaît sur le chronogramme de la figure 14 les huit valeurs intermédiaires appliquées à l'entrée du dispositif A4' sont dans un ordre correspondant à l'ordre d'entrée des valeurs transformées et la durée totale d'occupation du dispositif A4' pour stocker ces huit valeurs et les traiter est exactement égale à huit périodes d'horloge. Pendant la durée de la 17ième à la 24ième période d'horloge la sortie du dispositif A4' fournit successivement huit valeurs qui sont les valeurs transformées inverses. La transformation inverse d'un bloc de huit valeurs s'étale donc sur vingt-quatre périodes d'horloge. Le tableau suivant énumère les liaisons établies pour la transformation inverse d'un seul bloc de huit valeurs, appelé bloc courant.

Tableau n° 4

| nombre de périodes d'horloge | Liaisons à établir pour la transformation inverse du bloc courant (N = 8) |
|---|---|
| 1 | NEANT |
| 2 | |
| 3 | PM3'–A5' |
| 4 | |
| 5 | |
| 6 | |
| 7 | PM3'–A5' et A5'–A4'(T4') |
| 8 | |
| 9 | PM3'–A5'–PM4' |
| 10 | |
| 11 | A5'–A4'(T4') et PM4'–A4' |
| 12 | |
| 13 | A5'–A4'(T4') |
| 14 | |
| 15 | NEANT |
| 16 | |
| 17 | |
| 18 | |
| 19 | |
| 20 | |
| 21 | |
| 22 | |
| 23 | |
| 24 | |

Sur le chronogramme de la figure 14 il apparaît que les dispositifs de calcul élémentaires sont libres pendant une durée au moins égale à seize périodes sur les vingt-quatre périodes de la durée totale de la transformation. Il est donc possible de faire simultanément les calculs nécessaires pour la transformation de deux autres blocs de huit valeurs. Les chronogrammes correspondants au bloc suivant le bloc courant et au bloc précédant le bloc courant se déduisent du chronogramme représenté sur la figure 14 par de simples translations correspondant à huit périodes d'horloge. De la même façon il serait possible d'établir deux tableaux représentant les liaisons à établir pour la transformation inverse du bloc suivant et du bloc précédent. Le tableau suivant représente une récapitulation de toutes les liaisons à établir pour la transformation simultanée de ces trois blocs, compte tenu de la période de fonctionnement de chaque dispositif de calcul, qui est égale à huit périodes d'horloge.

Tableau n° 5

| nombre de périodes d'horloge (modulo 8) | Liaisons à établir pour la transformation inverse du bloc courant, du bloc suivant, et du bloc précédent (N = 8), simultanément |
|---|---|
| 1 | PM3'–A5'–PM4' |
| 2 | |
| 3 | PM3'–A5'–A4'(T4') et PM4'–A4' |
| 4 | |
| 5 | PM3'–A5'–A4'(T4') |
| 6 | |
| 7 | |
| 8 | |

Comme pour le dispositif de transformation directe, de nombreuses variantes de réalisation sont possibles pour le dispositif de transformation inverse. Les dispositifs de calcul PM3', PM4', A4', A5', et le dispositif de couplage 132 peuvent être réalisés de manière analogue aux exemples de réalisation de dispositifs de calcul du premier type et du second type et de dispositifs de couplage qui sont décrits plus loin. D'autre part, il est à la portée de l'homme de l'art de réaliser un dispositif de changement d'ordre pour mettre les valeurs appliquées à l'entrée du dispositif dans l'ordre $G_1$, $G_7$, $G_5$, $G_3$, $G_6$, $G_2$, $G_4$, $G_0$, si elles ne sont pas disponibles dans cet ordre.

La liaison entre la sortie du dispositif PM3' et l'entrée d'opérandes du dispositif A5' est une liaison permanente. Les liaisons à établir par le dispositif de couplage 132 se limitent donc aux liaisons représentées dans le tableau ci-dessous :

Tableau n° 6

| nombre de périodes d'horloge (modulo 8) | Liaisons non permanentes à établir pour la transformation inverse du bloc courant, du bloc suivant, et du bloc précédent (N = 8) |
|---|---|
| 1 | A5'–PM4' |
| 2 | |
| 3 | A5'–A4'(T4') et PM4'–A4' |
| 4 | |
| 5 | A5'–A4'(T4') |
| 6 | |
| 7 | |
| 8 | |

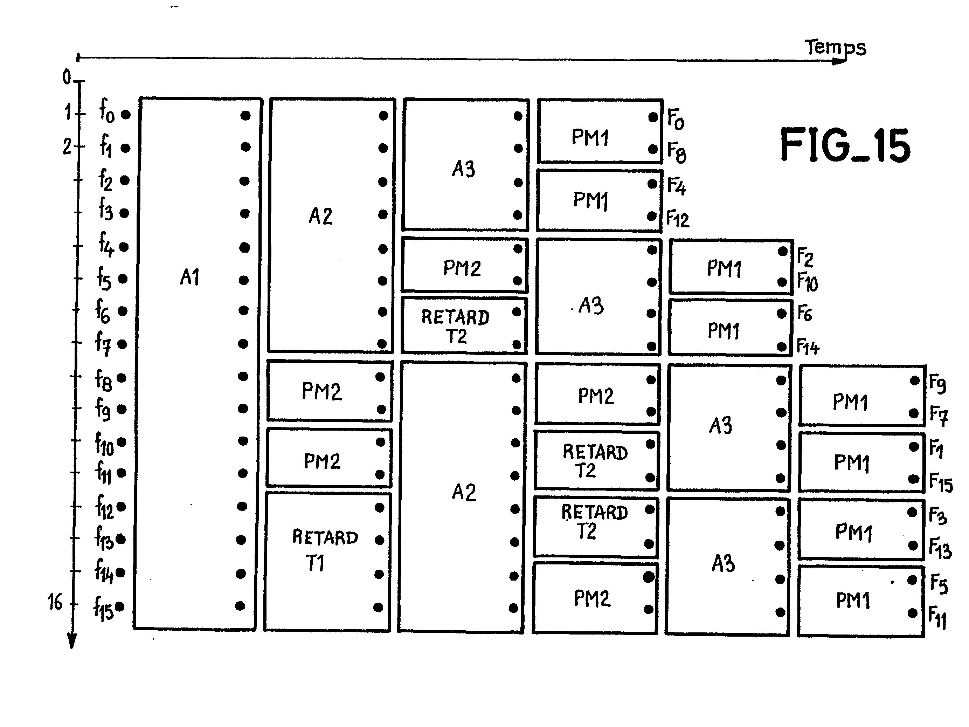

La figure 15 représente un diagramme déduit du diagramme de calcul représenté à la figure 3, pour la transformation cosinus directe d'un bloc de seize valeurs. Les liaisons entre les points, qui représentent les relations mathématiques entre les valeurs, ne sont pas représentées, par contre des rectangles délimitent les opérations qui sont attribuées à des dispositifs de calcul élémentaires A1, A2, A3, PM1, PM2. Les dispositifs de calcul A1, A2, A3, sont du premier type. Les dispositifs de calcul PM1 et PM2 sont du second type. Leur nombre est égal au nombre minimal, donc optimal, pour réaliser l'ensemble des calculs représentés sur la figure 3. Il reste à les coupler de telle façon qu'ils réalisent le calcul des transformées au rythme 1/T0 avec des moyens de couplage aussi simples que possible. Les calculs sont attribués à ces dispositifs de calcul élémentaires en appliquant les règles définies précédemment.

Dans la première colonne à gauche, le dispositif A1 réalise successivement seize opérations du type addition-soustraction de deux opérandes parmi les seize valeurs à transformer $f_0$, ..., $f_{15}$, puis fournit seize valeurs intermédiaires. Le dispositif de calcul A2 réalise huit opérations du type addition-soustraction de deux opérandes pris parmi les huit premières valeurs intermédiaires fournies par le dispositif A1, puis le dispositif PM2 calcule quatre valeurs intermédiaires par deux paires d'opérations du type multiplication-accumulation sur les deux couples de valeurs intermédiaires suivants fournis par le dispositif A1. Les quatre dernières valeurs intermédiaires fournies par la sortie de A1 sont transmises sans modification, avec un retard T1.

Dans la troisième colonne à partir de la gauche, les quatre premières valeurs intermédiaires calculées par le dispositif A2 sont utilisées par le dispositif A3 pour déterminer quatre autres valeurs intermédiaires par quatre opérations du type addition-soustraction. Puis le dispositif PM2 réalise une paire d'opérations multiplication-accumulation sur deux autres valeurs intermédiaires fournies par le dispositif A2. Les deux dernières valeurs intermédiaires fournies par le dispositif A2 sont transmises sans modification, avec un retard T2. Les quatre valeurs intermédiaires calculées par le dispositif PM2 et les valeurs intermédiaires transmises avec le retard T1 sont utilisées par le dispositif A2 pour huit opérations du type addition-soustraction.

Dans la quatrième colonne à partir de la gauche, quatre valeurs intermédiaires calculées par le dispositif A3 sont utilisées par le dispositif PM1 pour réaliser deux paires d'opération du type multiplication-accumulation. Puis deux valeurs intermédiaires calculées par le dispositif PM2 et deux valeurs transmises avec le retard T2 sont utilisées par le dispositif A3 pour réaliser quatre opérations du type addition-soustraction. Deux valeurs intermédiaires calculées par le dispositif A2 sont utilisées par le dispositif PM2 pour réaliser deux opérations du type multiplication-accumulation. Quatre valeurs déterminées par le dispositif A2 sont transmises sans modification, avec un retard T2. Les deux dernières valeurs intermédiaires calculées par le dispositif A2 sont utilisées par le dispositif PM2 pour réaliser deux opérations du type multiplication-accumulation.

Dans la cinquième colonne à partir de la gauche, le dispositif PM1 réalise successivement deux paires d'opérations du type multiplication-accumulation à partir de quatre valeurs intermédiaires déterminées par le dispositif A3. Le dispositif A3 réalise quatre opérations du type addition-soustraction sur deux valeurs intermédiaires déterminées par le dispositif PM2 et sur deux valeurs intermédiaires retardées avec le retard T2. Puis le dispositif A3 réalise de nouveau quatre opérations du type addition-soustraction sur deux autres valeurs intermédiaires retardées avec le retard T2 et sur deux autres valeurs intermédiaires déterminées par le dispositif PM2.

Dans la cinquième colonne à partir de la gauche, le dispositif PM1 réalise successivement deux paires d'opérations du type multiplication-accumulation à partir de quatre valeurs intermédiaires déterminées par le dispositif A3. Le dispositif A3 réalise quatre opérations du type addition-soustraction sur deux valeurs intermédiaires déterminées par le dispositif PM2 et sur deux valeurs intermédiaires retardées avec le retard T2. Puis le dispositif A3 réalise de nouveau quatre opérations du type addition-soustraction sur deux autres valeurs intermédiaires retardées avec le retard T2 et sur deux autres valeurs intermédiaires déterminées par le dispositif PM2.

Dans la dernière colonne à droite, le dispositif PM1 réalise successivement quatre paires d'opérations du type multiplication-accumulation à partir de huit valeurs déterminées successivement par le dispositif A3.

Cette façon d'attribuer les opérations de calcul aux dispositifs de calculs élémentaires a pour résultat que le dispositif de calcul PM1 est occupé pendant les seize périodes d'horloge correspondant à la durée attribuée pour le traitement d'un bloc de seize valeurs, autrement dit le dispositif PM1 est occupé à plein temps. Il en est de même du dispositif de calcul A1 qui détermine seize valeurs intermédiaires, du dispositif de calcul A2 qui détermine deux fois huit valeurs intermédiaires, et du dispositif de calcul A3 qui détermine quatre fois quatre valeurs intermédiaires. Seul le dispositif de calcul PM2 n'est pas occupé à plein temps car il réalise cinq paires d'opérations du type multiplication-accumulation pendant une durée de seize périodes d'horloge qui lui permettrait d'en réaliser huit.

La répartition des opérations du type multiplication-accumulation entre les dispositifs PM1 et PM2 pourrait être envisagée différemment, mais celle choisie ici a pour avantage que les opérandes reçues par le dispositif PM1 sont toujours des valeurs déterminées par le dispositif A3, par conséquent il y aura une liaison permanente entre la sortie de A3 et l'entrée d'opérandes de PM1. En outre, l'entrée du dispositif de calcul de transformées est reliée en permanence à l'entrée du dispositif A1 et la sortie du dispositif de calcul de transformées est reliée en permanence à la sortie du dispositif PM1. Ces liaisons permanentes simplifient la réalisation des moyens de couplage.

La figure 16 représente le schéma synoptique d'un exemple de réalisation d'un dispositif de calcul de transformées cosinus directes par blocs de seize valeurs, dans lequel les opérations sont attribuées à des dispositifs de calcul élémentaire, A1, A2, A3, PM1, et PM2, conformément aux diagrammes de la figure 15. Une borne d'entrée 161 reçoit une suite de valeurs à transformer et les applique à une entrée d'opérandes du dispositif de calcul A1. Une borne de sortie 164 constitue la borne de sortie du dispositif de calcul des transformées et est reliée à une sortie du dispositif de calcul PM1 déterminant une suite de valeurs de transformées. Un dispositif de couplage 162 possède trois entrées reliées respectivement à des sorties des dispositifs A1, PM2, et A2, et possède une première, une seconde, et une troisième sortie reliées respectivement à des entrées d'opérandes des dispositifs A2, A3, PM2. Une sortie du dispositif A3 est reliée à une entrée d'opérandes du dispositif de calcul PM1. Des moyens de commande 163 sont reliés respectivement à des entrées de commande des dispositifs A1, A2, A3, PM1, PM2, et du dispositif de couplage 162.

Le dispositif de couplage 162 comporte des moyens de commutation symbolisés par une matrice de trois conducteurs verticaux $B_1$, $B_2$, $B_3$, et de six conducteurs horizontaux, et trois dispositifs à retard 165, 166 et 167, réalisant respectivement des retard T1, T2, et T3. Les trois conducteurs verticaux $B_1$, $B_2$, $B_3$, de la matrice constituent respectivement trois entrées du dispositif 162, reliées respectivement à des sorties des dispositifs PM2, A1, et A2. Trois conducteurs horizontaux de la matrice constituent les trois sorties du dispositif 162. Trois autres conducteurs horizontaux de la matrice sont reliés respectivement à des entrée des dispositifs à retard 165, 166, et 167. Une sortie du dispositif à retard 165 et une sortie du dispositif à retard 167 sont reliées à la première sortie du dispositif de couplage 162. Une sortie du dispositif à retard 165 est reliée à la seconde sortie du dispositif de couplage 162.

La figure 17 représente un chronogramme illustrant le fonctionnement de cet exemple de réalisation pendant le traitement d'un bloc de seize valeurs appelé bloc courant. Ce même chronogramme permettra d'illustrer le fonctionnement pour la transformation des blocs précédents et des blocs suivants le bloc courant.

Pendant seize premières périodes d'horloge les valeurs à transformer sont stockées successivement dans le dispositif A1. Pendant la durée de la 17$^{\text{ième}}$ à la 32$^{\text{ième}}$ période le dispositif A1 fournit sur sa sortie successivement seize valeurs intermédiaires dont les huit premières sont transférées et stockées dans le dispositif A2, dont les quatre suivantes sont transférées et stockées dans le dispositif PM2, et dont les quatre dernières sont retardées d'une durée T1 puis transférées dans le dispositif A2, par l'intermédiaire du dispositif de couplage 162.

Pendant la durée de la 25$^{\text{ième}}$ à la 32$^{\text{ième}}$ période du signal d'horloge, le dispositif A2 fournit sur sa sortie une suite de huit valeurs calculées à partir des huits valeurs reues précédemment par ce dispositif A2. Les quatre premières valeurs fournies par la sortie de A2, et qui sont notées 0, ... , 3, sont transmises par le dispositif 162 avec un retard T2 égal à deux périodes du signal d'horloge, au dispositif A3 où elles sont stockées. Les 5$^{\text{ième}}$ et 6$^{\text{ième}}$ valeurs, notées 4 et 5, fournies par la sortie de A2, sont transmises directement, par le dispositif de couplage 162, au dispositif PM2. La 7$^{\text{ième}}$ et la 8$^{\text{ième}}$ valeur, notées 6 et 7, fournies par la sortie de A2 sont transmises avec un retard T2 par le dispositif de couplage 162, au dispositif A3, pendant la 33$^{\text{ième}}$ et la 34$^{\text{ième}}$ période du signal d'horloge.

Pendant la durée de la 27$^{\text{ième}}$ à la 32$^{\text{ième}}$ période du signal d'horloge, la sortie de PM2 fournit une suite de six valeurs. Les quatre premières de ces valeurs, notées 8, 9, 10, 11, ont été calculées à partir des valeurs notées 8, 9, 10, 11, fournies par la sortie de A1. Elles sont retardées d'un retard T3 égal à quatorze périodes du signal d'horloge, puis sont stockées dans le dispositif A2, par l'intermédiaire du dispositif de couplage 162. Pendant la 31$^{\text{ième}}$ et la 32$^{\text{ième}}$ période du signal d'horloge, les valeurs notées 4 et 5, fournies par la sortie de PM2 et ayant été calculées à partir des valeurs notées 4 et 5 fournies par la sortie de A2, sont transmises par le dispositif de couplage 162, au dispositif A3 où elles sont stockées.

Pendant la durée de la 31$^{\text{ième}}$ à la 38$^{\text{ième}}$ période d'horloge la sortie du dispositif A3 fournit huit valeurs notées 0, ... , 7 qui sont transmises à l'entrée du dispositif PM1 pour y être stockées. Le dispositif PM1 calcule huit valeurs notées 0, ... , 7 qui sont fournies par sa sortie pendant la durée de la 33$^{\text{ième}}$ à la 40$^{\text{ième}}$ période d'horloge. Ces valeurs constituent huit premières valeurs des transformées à calculer.

Grâce aux deux retards T2, les valeurs intermédiaires notées 0, ... , 7, sont appliquées à l'entrée du dispositif A3 dans l'ordre correspondant à l'ordre de sortie de ces valeurs à la sortie de A2. Ces retards T2 correspondent au temps nécessaire pour le calcul des valeurs notées 4 et 5 par PM2. Ils permettent de resynchroniser les valeurs notées 0 à 3, et les valeurs notées 6 et 7 par rapport à ces valeurs notées 4 et 5.

Les retards T1 et T3 jouent un rôle différent. Comme il apparaît sur la figure 17, ces retards séparent le calcul en deux ensembles qui se déroulent avec un intervalle d'environ seize périodes d'horloge. La figure 15 permettait de prévoir un retard T1 nécessaire pour compenser le temps de calcul dans le dispositif PM2. En fait, la séparation du calcul en deux ensembles séparés d'environ seize périodes d'horloge conduit à prendre une valeur T1 égale à seize périodes et non deux périodes comme il serait suffisant pour compenser le temps de calcul de PM2. D'autre part, cette séparation du calcul en deux ensembles n'apparaît pas sur le diagramme de la figure 15, c'est pourquoi le retard T3 n'apparaît pas sur ce diagramme.

Le second ensemble de calcul est réalisé en réutilisant les dispositifs de calcul A2, PM2, A3, et PM1. Pendant la durée de la 41$^{\text{ième}}$ et à la 44$^{\text{ième}}$ période d'horloge quatre valeurs notées 8 et à 11 sont stockées dans le dispositif A2 après avoir été retardées d'une durée T3 par le dispositif 162. Puis pendant la durée de la 45$^{\text{ième}}$ à la 48$^{\text{ième}}$ période d'horloge, les valeurs notées 12 à 15, fournies par la sortie du dispositif A1, sont stockées dans le dispositif A2 après avoir été retardées d'un retard T1 par le dispositif 162.

Pendant la 49$^{\text{ième}}$ et 50$^{\text{ième}}$ période d'horloge, les valeurs notées 8 et 9 déterminées par le dispositif A2 sont transférées et stockées dans le dispositif PM2 et sont utilisées pour calculer deux autres valeurs notées 8 et 9 qui sont fournies par la sortie de PM2 pendant la 51$^{\text{ième}}$ et la 52$^{\text{ième}}$ période d'horloge. Dès qu'elles sont disponibles ces valeurs sont transmises par le dispositif de couplage 162, à l'entrée du dispositif A3. Pendant la durée de la 51$^{\text{ième}}$ à la 54$^{\text{ième}}$ période d'horloge, la sortie du dispositif A2 est reliée à l'entrée du dispositif A3 par le dispositif 162 pour transmettre avec un retard T2 et stocker les valeurs notées 10 à 13.

Pendant la 55$^{\text{ième}}$ et la 56$^{\text{ième}}$ période d'horloge, les valeurs notées 14 et 15 sont transmises par le dispositif 162 de la sortie du dispositif A2 à l'entrée du dispositif PM2. Ces valeurs sont utilisées pour réali-

17

ser les calculs de deux autres valeurs intermédiaires notées 14 et 15 qui sont fournies par la sortie du dispositif PM2 pendant la 57$^{ième}$ et la 58$^{ième}$ période d'horloge.

Pendant la durée de la 57$^{ième}$ à la 62$^{ième}$ période d'horloge la sortie du dispositif A3 fournit huit valeurs notées 8, ... , 15 qui sont transmises à l'entrée du dispositif PM1 pour y être stockées. Le dispositif PM1 calcule huit nouvelles valeurs notées 8, ... , 15, qui sont fournies par sa sortie pendant la 57$^{ième}$ à 64$^{ième}$ période d'horloge. Ces valeurs constituent les huit dernières valeurs des transformées à calculer.

Le chronogramme de la figure 17 permet d'établir un tableau décrivant les liaisons à établir entre les dispositifs de calcul élémentaires pour réaliser le calcul des transformées du bloc courant.

Tableau n° 7

| nombre de périodes d'horloge | Liaisons à établir pour la transformation du bloc courant (N = 16) |
|---|---|
| 1 | NEANT |
| 2 | |
| 3 | |
| 4 | |
| 5 | |
| 6 | |
| 7 | |
| 8 | |
| 9 | |
| 10 | |
| 11 | |
| 12 | |
| 13 | |
| 14 | |
| 15 | |
| 16 | |
| 17 | A1–A2 |
| 18 | |
| 19 | |
| 20 | |
| 21 | |
| 22 | |
| 23 | |
| 24 | |
| 25 | A1–PM2 et A2–A3(T3) |
| 26 | |
| 27 | A1–PM2–A2(T3)–A3(T2) |
| 28 | |
| 29 | A1–A2(T1)–PM2–A2(T2) et A2–A3(T2) |
| 30 | |
| 31 | A1–A2(T1)–A3(T2)–PM1 et PM2–A3 |
| 32 | |
| 33 | A3–PM1 |
| 34 | |
| 35 | |
| 36 | |
| 37 | |
| 38 | |
| 39 | NEANT |
| 40 | |
| 41 | |
| 42 | |
| 43 | |
| 44 | |
| 45 | |
| 46 | |
| 47 | |
| 48 | |
| 49 | A2–PM2 |
| 50 | |
| 51 | A2–A3(T2) et PM2–A3 |
| 52 | |
| 53 | A2–A3(T2) |
| 54 | |
| 55 | A2–PM2 et A3–PM1 |
| 56 | |
| 57 | PM2–A3–PM1 |
| 58 | |
| 59 | A3–PM1 |
| 60 | |
| 61 | |
| 62 | |
| 63 | NEANT |
| 64 | |

Des chronogrammes analogues à celui de la figure 17 peuvent être établis pour la transformation des trois blocks de seize valeurs suivant le bloc courant et les trois blocs de seize valeurs précédant le bloc courant. Ces chronogrammes se déduisent les uns des autres par des translations de seize périodes d'horlage. De même il est possible d'établir un tableau décrivant les liaisons à établir pour la transformation de chacun de ces blocs, en décalant le numéro des périodes d'horlage dans le tableau établi pour la transformation du bloc courant.

Pendant la durée de soixante quatre périodes d'horloge le dispositif de calcul de transformées détermine soixante quatre valeurs de transformées, grâce au fait que chaque dispositif de calcul élémentaire fonctionne avec une période égale à la durée impartie pour le calcul de seize transformées c'est-à-dire seize périodes d'horloge. Le dispositif de couplage 162 qui relie ces dispositifs de calcul élémentaires fonctionne donc lui aussi avec une période égale à seize périodes d'horloge. Les liaisons à établir pour la transformation simultanée de quatre blocs peuvent donc être récapitulées dans un tableau correspondant à seize périodes d'horloge seulement.

Tableau n° 8

| nombre de périodes d'horloge (modulo 16) | Liaisons à établir pour la transformation simultanée de quatre blocs (N = 16): |
|---|---|
| 1 2 | A1–A2 et A3–PM1 et A2–PM2 |
| 3 4 | A1–A2 et A3–PM1 et A2–A3(T2) et PM2–A3 |
| 5 6 | A1–A2 et A3–PM1 et A2–A3(T2) |
| 7 8 | A1–A2 et A2–PM2 et A3–PM1 |
| 9 10 | A1–PM2 et A2–A3(T2) et PM2–A3–PM1 |
| 11 12 | A1–PM2–A2(T3)–A3(T2) et A3–PM1 |
| 13 14 | A1–A2(T1)–PM2–A2(T3) et A2–A3(T1) et A3–PM1 |
| 15 16 | A1–A2(T1)–A3(T2)–PM1 et PM2–A3 |

La liaison entre la sortie du dispositif A3 et l'entrée du dispositif PM1 est réalisée en permanence. Les liaisons non permanentes, à établir par le dispositif de couplage 162, sont récapitulées dans le tableau ci-dessous.

Tableau n° 9

| numéro de périodes d'horloge (modulo 16) | Récapitulations des liaisons non permanentes à établir pour la transformation simultanée de 4 blocs (N = 16), la liaison A3–PM1 étant permanente: |
|---|---|
| 1 | A1–A2–PM2 |
| 2 | |
| 3 | A1–A2–A3(T2) et PM2–A3 |
| 4 | |
| 5 | A1–A2–A3(T2) |
| 6 | |
| 7 | A1–A2–PM2 |
| 8 | |
| 9 | A1–PM2–A3 et A2–A3(T2) |
| 10 | |
| 11 | A1–PM2–A2(T1)–A3(T2) |
| 12 | |
| 13 | A1–A2(T1)–PM2–A2(T1)–A3(T2) |
| 14 | |
| 15 | A1–A2(T1)–A3(T2) et PM2–A3 |
| 16 | |

Comme il a été mentionné précédemment, le diagramme de calcul de la figure 3 n'est pas le seul diagramme pouvant être déduit de celui de la figure 1 par une permutation de l'ordre des valeurs intermédiaires respectant les relations mathématiques entre ces valeurs intermédiaires, par conséquent d'autres diagrammes analogues à celui de la figure 3 peuvent être obtenus tout en respectant la même contrainte consistant à calculer avec un intervalle de temps égal à une période d'horloge les deux valeurs d'opérandes nécessaires pour chaque paire d'opérations du type multiplication-accumulation. Par exemple, sur la figure 3 il est possible de permuter le couple de lignes conduisant aux valeurs $F_9$ et $F_7$ avec le couple de lignes conduisant aux valeurs $F_1$ et $F_{15}$. Ou bien il est possible de permuter le couple de lignes conduisant aux valeurs $F_3$ et $F_{13}$ avec le couple de lignes conduisant aux valeurs $F_5$ et $F_{11}$. Dans ces deux exemples, les calculs dans l'avant-dernière colonne à droite peuvent être encore réalisés au moyen d'un dispositif de calcul permettant des opérations du type addition-soustraction de deux opérandes pris parmi quatre valeurs, telles que A3 dans l'exemple de la figure 15.

Naturellement ces variantes dans l'ordre des calculs provoquent des variantes dans la façon de relier les dispositifs de calcul élémentaires en série pour chaque étape du calcul. La portée de l'invention ne se limite donc pas aux exemples de réalisation décrits par les tableaux ci-dessus, puisque de nombreuses variantes de la figure 3 sont à la portée de l'homme de l'art, dès lors qu'il connait le nombre optimal de dispositifs de calcul élémentaires et qu'il connaît les règles d'attribution des calculs à ces dispositifs : occupation maximale de la durée impartie au traitement d'un bloc et maintien en permanence du plus grand nombre possible de liaisons.

La figure 18 représente un schéma synoptique plus détaillé de l'exemple de réalisation représenté sur la figure 16. Il est prévu en outre des adaptations permettant d'utiliser ce dispositif pour des blocs de huit valeurs alternativement avec des blocs de seize valeurs. En particulier un dispositif de commutation 214 permet de shunter le dispositif de calcul A1. Cette figure représente notamment un mode de réalisation d'un dispositif de calcul élémentaire du premier type, A2, un exemple de réalisation d'un dispositif de calcul élémentaire du second type, PM2, et un exemple de réalisation de dispositif de couplage 162. Les dispositifs de calcul A1 et A3 peuvent être réalisés de manière analogue au dispositif A2. Le dispositif de calcul PM1 peut être réalisé de manière analogue au dispositif PM2.

Le dispositif de couplage 162 comporte trois bus notés $B_1$, $B_2$, $B_3$, qui sont représentés sur la figure 16 par les conducteurs verticaux de la matrice de commutation. Les conducteurs horizontaux de cette matrice de commutation sont réalisés en fait par des registres 200 à 206 dont les entrées sont branchées sur ces bus $B_1$, $B_2$, et $B_3$. Les registres 200, 203, 204, et 205 ont une capacité correspondant à une seule valeur numérique. Les registres 201, 202, 206 sont des registres à décalage ayant une capacité permettant de réaliser respectivement les retards T1, T3, et T2.

Chacun des registres 200 à 206 possède une entrée d'horloge provoquant l'écriture de la valeur numérique présente à son entrée à chaque période d'horloge, et possède une entrée de commande permettant d'activer une sortie qui normalement est à haute impédance. Cette entrée d'horloge et cette entrée de commande sont reliées aux moyens de commande 163 par des liaisons non représentées sur la figure 18 pour plus de clarté.

Une première entrée du dispositif de couplage 162, qui est reliée à la sortie du dispositif de calcul A1, alimente le bus $B_2$ sur lequel sont branchées une entrée série du registre 201, une entrée série du registre 202, et une entrée du registre 203. La seconde entrée du dispositif 162 est reliée au bus $B_1$ sur lequel sont branchées une entrée du registre 200 et une entrée du registre 205. Une troisième entrée du dispositif 162 est reliée au bus $B_3$ sur lequel sont branchées une entrée du registre 204 et une entrée série du registre à décalage 206.

Une sortie du registre 200, une sortie du registre 201, et une sortie du registre 202 sont reliées en parallèle sur un bus 207 constituant la première sortie du dispositif 162. Une sortie du registre 203 et une sortie du registre 204 sont reliées en parallèle sur un bus 208 constituant la troisième sortie du dispositif 162. Une sortie du registre 205 et une sortie série du registre à décalage 206 sont reliées en parallèle à un bus 209 qui constitue la seconde sortie du dispositif 162. Chaque registre 201 à 206 possède une entrée d'horloge recevant un signal d'horloge H fourni par les moyens de commande 163 et une entrée de validation de sa sortie recevant respectivement des signaux de commande $E_0$, $E_1$, $E_2$, $E_3$, $E_4$, $E_5$ et $E_6$ fournis par les moyens de commande 163. En l'absence d'un signal de validation la sortie de chacun des registres a une haute impédance et n'influe donc pas sur le bus auquel elle est raccordée.

Ces signaux de commande permettent d'établir les liaisons mentionnées précédemment dans le tableau n° 9 pour les blocs de seize valeurs ou celles mentionnées par le tableau n° 3 pour les blocs de huit valeurs. Pour tranformer des blocs de huit valeurs le dispositif A1 est rendu transparent et les dispositifs A2, A3, PM1 et PM2 jouant le rôle des dispositifs A4, A5, PM3, PM4 respectivement, et les retards T4 et T2 sont identiques et égaux à deux périodes d'horloge. Par exemple pour relier la sortie du dispositif de calcul A2 à l'entrée du dispositif de calcul PM2 les moyens de commande génèrent le signal $E_4$ pour valider la transmission du contenu du registre 204 à l'entrée du dispositif PM2. Le registre 204 contient une valeur qui est présente sur le bus $B_3$ et qui a été mémorisé sous l'action du signal d'horloge H.

Le dispositif de calcul de transformées reçoit, par une borne d'entrée 167 un signal logique T qui indique la taille des blocs de valeurs à traiter. Ce signal commande notamment le dispositif de commutation 214 pour shunter le dispositif A1 pendant la transformation de blocs de huit valeurs.

Dans cet exemple de réalisation le dispositif de calcul A2, qui réalise des opérations d'addition, ou soustraction de deux opérandes près parmi huit valeurs, comprend : quatre mémoires vives 210, 211, 212, 213, ayant une capacité de seize valeurs ; un dispositif de commande 220 ; un additionneur-soustracteur 215 ; et un registre 216. L'entrée du dispositif A2 est reliée à un bus 217 sur lequel sont branchées en parallèle des entrées de données des mémoires vives 210 à 213. Les sorties des mémoires 210 et 212 sont reliées en parallèle à un bus 218 qui est relié à une première entrée de l'additionneur-soustracteur 215. Une sortie de la mémoire 211 et une sortie de la mémoire 213 sont reliées en parallèle à un bus 219 qui est relié à une seconde entrée de l'additionneur-soustracteur 215. Une entrée de commande d'addition-soustraction de l'additionneur 215 est reliée à une sortie du dispositif de commande 220 pour recevoir un signal de commande noté +/- . Une sortie de l'additionneur-soustracteur 215 est reliée à une entrée du registre 216. Une sortie du registre 216 constitue la sortie du dispositif A2.

Chacune des mémoires 210 à 213 possède une entrée de commande de lecture, et une entrée de commande d'écriture, reliées à des sorties du dispositif 220 par des liaisons non représentées sur la figure pour plus de clarté. Le dispositif 220 reçoit le signal T fourni par la borne 167 et reçoit le signal d'horloge H et un signal d'initialisation I fournis par les moyens de commande 163. Le dispositif 220 fonctionne avec une période égale à seize périodes d'horloge pour transformer des blocs de seize valeurs et avec une période égale à huit périodes d'horloge pour transformer des blocs de huit valeurs, selon la valeur du signal T. Il reçoit le signal T fourni par la borne d'entrée 167 et les signaux H et I fournis par les moyens de commande 163.

Le dispositif 220 commande l'écriture des valeurs numériques appliquées à l'entrée du dispositif A2, dans les mémoires 210 et 211 pendant huit premières périodes d'horloge et dans les mémoires 212 et 213 pendant les huit périodes suivantes. Il commande une lecture dans les mémoires 210 et 211 pendant huit périodes suivantes alors qu'il commande une écriture dans les mémoires 212 et 213. Pendant l'écriture dans une paire de mémoires, 210 et 211, ou 212 et 213, le dispositif 220 fournit les mêmes valeurs d'adresse d'écriture aux deux mémoires. Pendant la lecture dans deux mémoires, 210 et 211, ou 212 et 213, le dispositif 220 fournit des valeurs d'adresse différentes pour les deux mémoires conformément au diagramme de la figure 3 de façon à réaliser la somme ou la différence de deux valeurs stockées en mémoire à des adresses différentes.

Le registre 216 possède une entrée d'horloge recevant le signal d'horloge H. Il stocke la valeur du résultat déterminé par le dispositif A2 avant de la transmettre à la sortie de ce dispositif A2.

Le dispositif de calcul PM2 comporte : une paire de multiplicateurs-accumulateurs 232 et 233 ; une paire de mémoires mortes 230 et 231 ; un dispositif 234 de commande des mémoires 230 et 231 ; et un registre 236. L'entrée du dispositif PM2 est reliée à un bus 231 qui est relié à une première entrée d'opérandes du multiplicateur-accumulateur 232 et à une première entrée d'opérandes du multiplicateur-accumulateur 233. Chacun de ces multiplicateurs-accumulateurs 232, 233 possède une seconde entrée d'opérandes reliée respectivement à une sortie de la mémoire morte 230 et à une sortie de la mémoire morte 231, et possède une sortie reliée à un bus 235. Le registre 236 possède une entrée reliée au bus 235, une entrée de commande recevant le signal d'horloge H, et une sortie constituant la sortie du dispositif PM2.

Les multiplicateurs-accumulateurs 232 et 233 possèdent une entrée d'horloge recevant le signal d'horloge H. Les mémoires mortes 230 et 231 possèdent chacune une entrée d'adresse qui est reliée à une sortie du dispositif 234. Le dispositif 234 reçoit le signal T et reçoit le signal d'horloge H et le signal d'initialisation I qui sont fournis par les moyens de commande 163. Le dispositif 234 peut être constitué principalement d'un compteur modulo 8 ou modulo 16, le modulo étant commandé par le signal T, selon que la taille des blocs de valeurs à transformer est 8 ou 16 respectivement. Le compteur compte les impulsions d'horloge, modulo 16 ou 8, et fournit une adresse identique aux deux mémoires mortes 230 et 231. Celles-ci fournissent sur leurs sorties respectives des valeurs de coefficients prédéterminées qui sont fonction de ces adresses et qui permettent de réaliser les multiplications-accumulations figurant dans le diagramme des calculs de la figure 3.

La réalisation du dispositif de calcul A1 est analogue à celle du dispositif de calcul A2. La réalisation du dispositif de calcul A3 est analogue aussi à celle du dispositif A2, à l'exception de la capacité des mémoires 210 à 213 qui est égale à quatre valeurs au lieu de seize et l'absence du signal T, car la taille des blocs n'influe pas sur le nombre des valeurs parmi lesquelles sont pris les opérandes, et n'influe pas sur le choix de ces valeurs, car les calculs pour les blocs de huit valeurs sont inclus dans les calculs pour les blocs de seize valeurs. La réalisation du dispositif PM1 est tout à fait analogue à celle du dispositif PM2, seules diffèrent les valeurs des coefficients contenus dans les mémoires mortes 230 et 232, et qui sont conformes à celles indiquées par les diagrammes de calcul de la figure 3 et de la figure 15.

La borne de sortie 164 constitue la borne de sortie du dispositif de calcul de transformées cosinus, et fournit les valeurs de transformées dans l'ordre $F_0$ , $F_8$ , ... , $F_{11}$ . Dans des applications nécessitant d'obtenir les transformées dans l'ordre $F_0$ , ... , $F_{15}$ , il est nécessaire de prévoir en outre un dispositif 165 de changement d'ordre des transformées, ayant une entrée reliée à la borne de sortie 164 et ayant une sortie reliée à une borne de sortie 166 constituant une nouvelle borne de sortie du dispositif de calcul des transformées.

La réalisation de ce dispositif 165 de changement d'ordre est à la portée de l'homme de l'art. Il peut être constitué de deux mémoires vives ayant chacune une capacité égale à seize valeurs et de moyens de commande pour commander des lectures et des écritures dans ces deux mémoires. Les valeurs des transformées fournies par la borne de sortie 164 sont inscrites par blocs de seize dans l'une des mémoires puis sont lues par blocs de seize dans un ordre correspondant à l'ordre souhaité. Les deux mémoires sont utilisées alternativement en lecture et en écriture.

La réalisation des moyens de commande 163 est à la portée de l'homme de l'art. Ils peuvent comporter un dispositif générateur de signal d'horloge synchronisé avec les valeurs numériques appliquées à la borne d'entrée 161 et un dispositif logique générant les signaux de commande $E_0$ , ... , $E_6$ , par exemple au moyen d'un compteur modulo 16 et d'une mémoire morte.

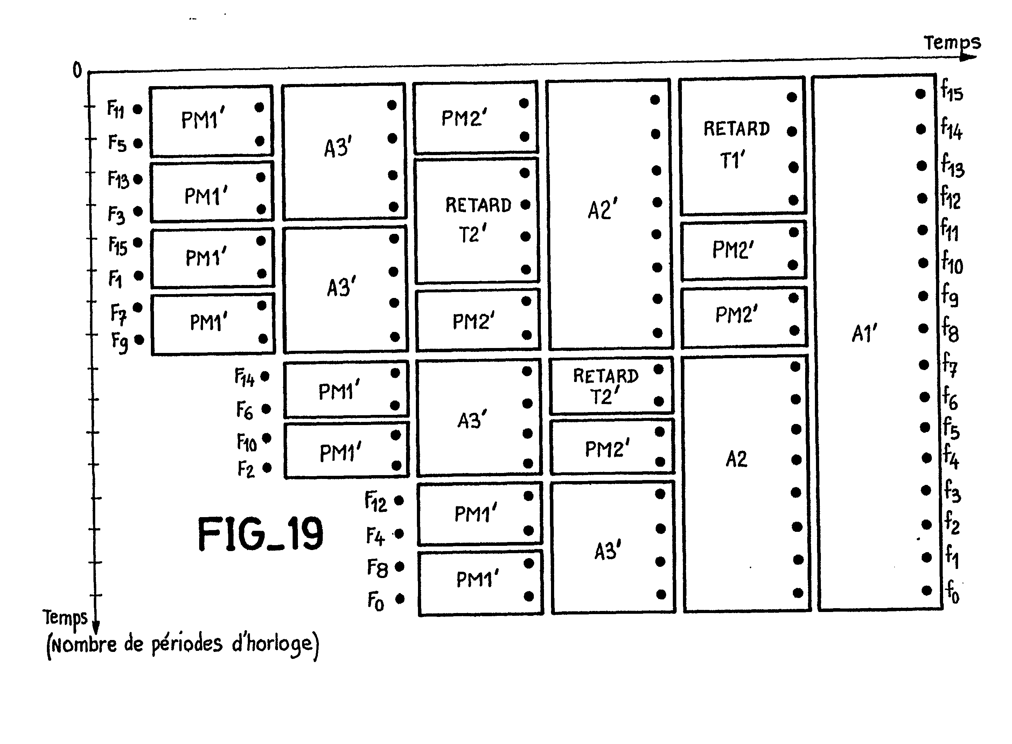

La figure 19 représente le diagramme des calculs de la figure 4, sans les liaisons entre les points, et où les rectangles délimitent les opérations attribuées à des dispositifs de calcul élémentaires du premier type : A1', A2', A3', et du second type : PM1' et PM2'.

Le nombre d'opérations de calcul pour la transformation inverse est le même que pour la transformation directe, car il découle du diagramme de la figure 3, celle-ci étant représentative d'un mode de calcul de la transformation inverse à condition d'inverser au moins l'axe horizontal des temps. Il faut donc nécessairement trois dispositifs du premier type et deux dispositifs du second type.

Les calculs sont attribués à ces dispositifs de calcul élémentaires en appliquant les règles définies précédemment.

Les opérations de calcul sont attribuées de telle façon que les dispositifs PM1', A3', A2', et A1' calculent chacun seize valeurs pendant la durée totale du calcul de seize transformées inverses. Ils sont ainsi occupés à plein temps, puisque chaque dispositif ne peut consacrer que seize périodes d'horloge au total pour le traitement de chaque bloc de seize valeurs transformées, le reste du temps de calcul total étant utilisé pour traiter simultanément d'autres blocs précédents ou suivants le bloc courant. Seul le dispositif de calcul PM2' n'est pas utilisé à plein temps puisqu'il calcule seulement dix valeurs pendant la durée totale du calcul.

Les opérations de multiplication-accumulation représentées à l'extrême gauche de chaque ligne du diagramme sont toutes attribuées au même dispositif PM1' pour que son entrée d'opérandes soit reliée en permanence à la borne d'entrée du dispositif de calcul de transformées inverses. Les quatre ensembles d'opérations d'addition-soustraction de deux opérandes pris parmi quatre valeurs, qui suivent les opérations réalisées par PM1', sont attribuées à un même dispositif A3' pour que la liaison PM1' - A3' soit permanente.

La première colonne de gauche dans le diagramme de la figure 19, comporte quatre paires d'opérations du type multiplication, qui sont réalisées par le dispositif PM1'. La seconde colonne à gauche comporte quatre premières opérations du type addition-soustraction réalisées par le dispositif A3', puis quatre autres opérations du type addition-soustraction réalisées par le dispositif A3', puis deux paires d'opératins du type multiplication-accumulation réalisées par le dispositif PM1'.

La troisième colonne à gauche comporte une paire d'opérations du type multiplication-accumulation réalisées par le dispositif PM2', puis la transmission de quatre valeurs fournies par A3, avec un retard T2', puis une paire d'opérations de multiplication-accumulation réalisée par PM2', puis quatre opérations du type addition-soustraction réalisées par le dispositif A3', puis deux paires d'opérations du type multiplication-accumulation réalisées par le dispositif PM1'.

Dans la quatrième colonne à partir de la gauche, huit opérations du type addition-soustraction sont réalisées par le dispositif A2', puis deux valeurs sont transmises avec un retard T2', puis deux opérations du type multiplication-accumulation sont réalisées par le dispositif PM2', puis quatre opérations du type addition-soustraction sont réalisées par le dispositif A3'. Dans la cinquième colonne à partir de la gauche quatre valeurs sont transmises avec un retard T1', puis deux paires d'opérations du type multiplication-accumulation sont réalisées par le dispositif PM2', puis huit opérations du type addition-soustraction sont réalisées par le dispositif A2'. Dans la dernière colonne à droite, seize opérations du type addition-soustraction sont réalisées par le dispositif A1'.

L'attribution des opérations de calcul à partir d'un diagramme analogue à celui de la figure 4 mais différent par la position relative des lignes de calcul conduirait au même nombre de dispositifs de calcul élémentaires, seul serait modifié l'ordre des commutations réalisées entre ces dispositifs et les retards éventuellement ajoutés dans la transmission des valeurs d'un dispositif à un autre.

La figure 20 représente le schéma synoptique d'un exemple de réalisation d'un dispositif de calcul de transformées cosinus inverses, par blocs de seize valeurs, selon l'invention. Cet exemple de réalisation met en oeuvre l'attribution des opérations de calcul représentée sur la figure 19. Outre les dispositifs de calcul PM1', PM2', A1', A2', et A3', cet exemple de réalisation comporte un dispositif de couplage 192 et des moyens de commande 193. Les moyens de commande 193 sont reliés à des entrées de commande des dispositifs de calcul PM1', PM2', A1', A2', et A3', et à une entrée de commande du dispositif de couplage 192.

Une borne d'entrée 191 reçoit une suite de valeurs transformées et les applique à une entrée d'opérandes du dispositif de calcul PM1'. Ce dernier possède une sortie reliée à une entrée d'opérandes du dispositif de calcul A3'. Le dispositif de calcul A1' possède une sortie reliée à une borne de sortie 194 constituant la borne de sortie du dispositif de calcul de transformées cosinus inverses, fournissant une suite de valeurs transformées inverses. Le dispositif de commutation 192 possède trois entrées reliées respectivement à une sortie du dispositif de calcul A3', à une sortie du dispositif de calcul A2', et à une sortie du dispositif de calcul PM2', et possède une première, une seconde, et une troisième sortie reliées respectivement à une entrée d'opérandes du dispositif de calcul A2', à une entrée d'opérandes du dispositif de calcul A1', et à une entrée d'opérandes du dispositif de calcul PM2'.

Le dispositif de commutation 192 comporte des moyens de commutation symbolisés par une matrice de commutation possèdant trois conducteurs verticaux et six conducteurs horizontaux, et comporte trois dispositifs à retard : 195, 196, 197, réalisant respectivement des retards T2', T1', et T3'. Les trois conducteurs verticaux de la matrice constituent les trois entrées du dispositif 192. Trois conducteurs horizontaux de la matrice constituent respectivement la première, la seconde, et la troisième sortie du dispositif 192. Trois autres conducteurs horizontaux de la matrice sont reliés respectivement aux entrées des trois dispositifs à retard 195, 196 et 197. Les sorties des dispositifs à retard 195, 196, 197 sont reliées respectivement à la première, à la seconde, à la troisième sortie du dispositif 192.

La réalisation des dispositifs de calcul élémentaire A1', A2', A3', PM1', et PM2' constituant cet exemple de réalisation, est analogue à celle des dispositifs de calcul constituant le dispositif de calcul de transformées cosinus directe représentée sur la figure 18. Seuls les coefficients de calcul sont différents. Il est à la portée de l'homme de l'art de programmer les mémoires mortes 230 et 232 et les dispositifs de commande 220 des dispositifs de calcul élémentaires, en fonction des valeurs indiquées sur le diagramme de la figure 4 et en fonction de l'attribution des opérations de calcul indiquées sur le diagramme de la figure 19.

La figure 21 représente un chronogramme illustrant le fonctionnement de cet exemple de réalisation pour la transformation cosinus inverse d'un bloc de seize valeurs de transformées directes. Comme dans les chronogrammes précédents les valeurs obtenues à chaque étape du calcul sont représentées par un numéro d'ordre de 0 à 15. Conformément au diagramme de la figure 4 les valeurs transformées sont appliquées dans l'ordre : $F_{11}$ , $F_5$ , $F_{13}$ , $F_3$ , $F_{15}$ , $F_1$ , $F_7$ , $F_9$ , $F_{14}$ , $F_6$ , $F_{10}$ , $F_2$ , $F_{12}$ , $F_4$ , $F_8$ , $F_0$ . D'autre part, elles sont appliquées en deux paquets distincts : les huit premières valeurs sont séparées des huit valeurs suivantes par un intervalle de temps égal à seize périodes d'horloge. Cet intervalle de temps, ainsi que l'ordre particulier indiqué ci-dessus, peuvent être obtenus par un dispositif de changement d'ordre, si les valeurs transformées sont disponibles dans l'ordre des coefficients de la matrice des transformées d'un bloc, c'est-à-dire l'ordre $F_0$ , ... , $F_{15}$ . La réalisation d'un tel dispositif de changement d'ordre est à la portée de l'homme de l'art.

Les huit premières valeurs transformées appliquées à l'entrée d'opérandes du dispositif PM1' sont stockées dans celui-ci au cours des huit premières périodes d'horloge. Avec un retard égal à deux périodes d'horloge, le dispositif PM1' calcule une suite de huit valeurs intermédiaires qui sont stockées immédiatement dans le dispositif A3'. Dès que quatre valeurs intermédiaires ont été stockées dans le dispositif A3'. Ce dernier calcule une suite de quatre valeurs qu'il fournit sur sa sortie pendant la durée de la $6^{ième}$ à la $9^{ième}$ période d'horloge. Les quatre dernières valeurs intermédiaires sont utilisées par le dispositif A3' pour calculer quatre autres valeurs qu'il fournit sur sa sortie pendant la $10^{ième}$ à la $14^{ième}$ période d'horloge.

Pendant la $7^{ième}$ et la $8^{ième}$ période d'horloge les deux valeurs notées 0, 1, fournies par la sortie du dispositif A3' sont transférées et stockées dans le dispositif PM2'. Pendant la durée de la 9ième à la 12ième période d'horloge les quatre valeurs notées 2, 3, 4, 5, fournies par la sortie du dispositif A3' sont transférées et stockées dans le dispositif A2' par l'intermédiaire du dispositif de commutation 192 qui les retarde d'un retard T2' égal à deux périodes d'horloge. Pendant la 9ième et la 10ième période d'horloge les valeurs notées 0, 1, calculées par le dispositif PM2' sont transmises sans retard par le dispositif de commutation 192, au dispositif A2' où elles sont stockées. Pendant la 13ième et la 14ième période d'horloge, les valeurs notées 6 et 7 fournies par le dispositif A3' sont transmises par le dispositif de commutation 192, au dispositif PM2'. Ce dernier calcule à partir de celle-ci deux valeurs intermédiaires notées 6 et 7 qui sont transmises par le dispositif de commutation 192 et stockées par le dispositif A2' pendant la 15ième et la 16ième période d'horloge.

A la fin de la 16ième période d'horloge le dispositif A2' contient huit valeurs notées 0, 1, 2, 3, 4, 5, 6, 7, qui lui permettent de calculer huit valeurs pendant les huit périodes d'horloge suivantes. Pendant la durée de la 17ième à la 20ième période d'horloge les quatre valeurs notées 0, 1, 2, 3, fournies par la sortie du dispositif A2' sont transmises avec un retard T1' par le dispositif de commutation 192, au dispositif A1' où elles sont stockées. Le retard T1' est égal à 16 périodes d'horloge.

Pendant la durée de la 17ième à la 24ième période d'horloge, les valeurs notées 4, 5, 6, 7, fournies par la sortie du dispositif A2' sont transmises avec un retard T3' par le dispositif de commutation 192 au dispositif PM2' où elles sont stockées pendant la durée de la 35ième à la 38ième période d'horloge. Le retard T3' est égal à 14 périodes d'horloge.

Pendant la durée de la 25ième à la 32ième période d'horloge un second paquet de huit valeurs transformées est appliqué à l'entrée du dispositif PM1', dans l'ordre indiqué précédemment. Les valeurs de ce second paquet sont utilisées pour une seconde série de calculs réutilisant les dispositifs de calcul qui ont été utilisés précédemment pendant la durée de la 1ère à la 16ième période d'horloge. Pendant la durée de la 26ième à la 32ième période d'horloge, les valeurs calculées par le dispositif PM1' sont fournies sur sa sortie successivement et sont transmises par le dispositif de commutation 192, au dispositif A3'. Celui-ci calcule une suite de huit valeurs intermédiaires avec un retard de quatre périodes d'horloge correspondant aux quatre valeurs nécessaires pour commencer à effectuer un calcul.

Pendant la 31ième et la 32ième période d'horloge les deux premières valeurs, notées 8 et 9, fournies par la sortie du dispositif A3' sont transmises par le dispositif de commutation 192 avec un retard T2', au dispositif A2' où elles sont stockées pendant la 33ième et la 34ième période d'horloge. Simultanément, pendant cette 33ième et cette 34ième période d'horloge, la sortie du dispositif A3' fournit deux valeurs notées 10 et 11, qui sont transmises sans retard par le dispositif de commutation 192, au dispositif PM2'.

Pendant la durée de la 33ième à la 38ième période d'horloge, le dispositif PM2' reçoit successivement six valeurs et calcule, avec un retard de deux périodes, six autres valeurs notées 10, 11, 4, 5, 6, 7. Les deux premières valeurs fournies par la sortie du dispositif PM2', pendant la 34ième et la 35ième période d'horloge, sont transmises par le dispositif de commutation 192, au dispositif A2'. Les quatre dernières valeurs fournies par la sortie du dispositif PM2', notées 4 à 7, sont transmises sans retard par le dispositif de commutation 192, au dispositif A1' où elles sont stockées.

Pendant la durée de la 41ième à la 48ième période d'horloge le dispositif A2' fournit une suite de huit valeurs notées 8 à 15 qui sont transmises par le dispositif de commutation 192 au dispositif A1'. Ainsi pendant la durée de la 33ième à la 48ième période le dispositif A1' stocke une suite de seize valeurs qui permettent, pendant la durée de la 48ième à la 64ième période, de calculer une suite de seize valeurs transformées inverses.

La durée totale de ce calcul est de 64 périodes d'horloge mais chaque dispositif de calcul n'est occupée que pendant seize périodes d'horloge, à l'exception du dispositif PM2' qui n'est occupé que pendant dix périodes. Il apparaît donc que le traitement des paquets de valeurs transformées suivants et précédents peut être réalisé en parallèle avec le traitement du paquet courant. Il est possible de dessiner des chronogrammes analogues à celui de la figure 20 pour les paquets de valeurs précédents et pour les paquets de valeurs suivants, simplement en décalant l'échelle des temps d'un nombre entier d'intervalles correspondant à huit périodes d'horloge.

Le chronogramme de la figure 21 permet d'établir un tableau des liaisons à établir entre les dispositifs de calcul élémentaires pour réaliser la transformation cosinus inverse du bloc courant.

Tableau n° 10

| nombre de périodes d'horloge | Liaisons à établir pour la transformation cosinus inverse du bloc courant (N = 16) |
|---|---|
| 1 2 | NEANT |
| 3 4 5 6 | PM1'–A3' |
| 7 8 | PM1'–A3'–PM2' |
| 9 10 | PM1'–A3'–A2'(T2') et PM2'–A2' |
| 11 12 | A3'–A2'(T2') |
| 13 14 | A3'–PM2' |
| 15 16 | PM2'–A2' |
| 17 18 19 20 | A2'–A1'(T1') |
| 21 22 23 24 | A2'–PM2'(T3') |
| 25 26 | NEANT |
| 27 28 29 30 | PM1'–A3' |
| 31 32 | PM1'–A3'–A2'(T2') |
| 33 34 | PM1'–A3'–PM2' |
| 35 36 | A3'–A2'(T2') et PM2'–A2' |
| 37 38 | A3'–A2'(T2') et PM2'–A1' |
| 39 40 | PM2'–A1' |
| 41 42 43 44 45 46 47 48 | A2'–A1' |
| 49 50 51 52 53 54 55 56 57 58 59 60 61 62 63 64 | NEANT |

Des tableaux analogues peuvent être déduits de celui-ci pour les blocs suivants et les blocs précédents. Chaque dispositif de calcul et le dispositif de commutation fonctionnant avec une période égale à seize périodes d'horloge, ces tableaux peuvent être simplifiés et ne comporter que 16 lignes. Les liaisons à établir pour la transformation cosinus inverse des blocs suivants et des blocs précédents peut être récapitulée par le tableau suivant :

Tableau n° 11

| nombre de périodes d'horloge (modulo 16) | Liaisons à établir pour la transformation cosinus inverse du bloc courant des blocs suivants, et des blocs précédents |
|---|---|
| 1 2 | A2'–A1'(T1') et PM1–A3'–PM2' |
| 3 4 | PM1'–A3'–A2'(T2')–A1'(T1') et PM2'–A2' |
| 5 6 | PM1–A3'–A2'(T2')–PM2'(T1')–A1' |
| 7 8 | PM1'–A3'–PM2'–A1' et A2'–PM2'(T1') |
| 9 10 | PM1'–A3'–A2'(T2')–A1' et PM2'–A2' |
| 11 12 | PM1'–A3'–A2'(T2')–A1' |
| 13 14 | A3'–PM2' et PM1'–A3' et A2'–A1' |
| 15 16 | PM1'–A3'–A2'(T2') et PM2'–A2'–A1' |

Comme cela est prévu sur la figure 19 il existe une liaison permanente entre la sortie du dispositif de calcul PM1' et l'entrée du dispositif de calcul A3'. Cette liaison n'est donc pas à établir par le dispositif de commutation 192. Le tableau suivant récapitule les liaisons non permanentes qui sont à établir par le dispositif de commutation 192 pour la transformation cosinus inverse du bloc courant, des blocs précédents, et des blocs suivants.

Tableau n° 12

| nombre de périodes d'horloge (modulo 16) | Liaisons non permanents à établir pour la transformation inverse du bloc courant, des blocs suivants, et des blocs précédents (N = 16) |
|---|---|
| 1 2 | A3'–PM2' et A2'–A1'(T1') |
| 3 4 | A3'–A2'(T2')–A1'(T1') et PM2'–A2' |
| 5 6 | A3'–A2'(T2')–PM2'(T1')–A1' |
| 7 8 | A3'–PM2'–A1' et A2'–PM2'(T1') |
| 9 10 | A3'–A2'(T2')–A1' et PM2'–A2' |
| 11 12 | A3'–A2'(T2')–A1' |
| 13 14 | A3'–PM2' et A2'–A1' |
| 15 16 | A3'—A2'(T2')–PM2'–A2'–A1' |

La figure 22 représente le schéma synoptique d'un exemple de réalisation d'un dispositif de codage d'images selon l'invention. Ce dispositif met en oeuvre le procédé de codage par transformation cosinus bi-dimensionnelle, cette transformation étant réalisée au moyen de deux dispositifs de calcul de transformées cosinus mono-dimensionnelles.

La formule (1) de calcul d'une transformée cosinus directe bi-dimensionnelle peut être mise sous la forme :

$$F_b(u,v) = \frac{c(u)}{2N} \cdot \sum_{i=0}^{N-1} a_{iu} \left[ \sum_{j=0}^{N-1} f(i,j) \cdot a_{jv} \right]$$

$$= \frac{c(u)}{2N} \sum_{i=0}^{N-1} a_{iu} \cdot F(i)$$

$F_b(u,v)$ est égal au produit d'une constante, 4, par la transformée mono-dimensionnelle d'un bloc de valeurs $F(0)$, ..., $F(N-1)$, où $F(i)$ est la transformée mono-dimensionnelle d'un bloc de valeurs $f(i,o)$, ... , $f(i, N-1)$.

La figure 22 représente le schéma synoptique d'un exemple de réalisation d'un dispositif de codage d'images selon l'invention, comportant deux dispositifs de calcul de transformées cosinus directes mono-dimensionnelles selon l'invention. Ce dispositif de codage comporte : un dispositif 233 d'acquisition des valeurs de trois signaux de couleurs R, V, B ; un dispositif numérique 234 de filtrage vertical ; une mémoire 235 ayant une capacité correspondant à une ligne d'image ; deux dispositifs de calcul de transformées cosinus directes mono-dimensionnelles, 236 et 237 ; deux mémoires vives 238 ayant chacune une capacité de 16 lignes d'images ; un dispositif de codage 239 et des moyens de commande 241.

Trois signaux analogiques R, V, B sont appliqués respectivement à trois bornes d'entrée 230, 231, et 232, reliées à trois entrées du dispositif 233. Le dispositif 233 échantillonne les trois signaux analogiques et restitue une suite de valeurs numériques de luminance Y et une suite de valeurs de différence de couleur en alternant les valeurs DR de différence rouge DR et les valeurs DB de différence bleue. Ces valeurs numériques sont appliquées respectivement à deux entrées du dispositif 234 de filtrage vertical qui réalise la suppression des valeurs du signal de différence de couleur bleue pour une ligne sur deux et la suppression des valeurs du signal de différence de couleur rouge pour les autres lignes.

Les valeurs de luminance et les valeurs restantes des signaux de différence de couleur sont appliquées à deux entrées de la mémoire 235 qui stocke toutes ces valeurs pour une ligne d'image et qui restitue l'ensemble des valeurs de luminance de cette ligne, puis l'ensemble des valeurs du signal de différence de couleur subsistant pour cette ligne, c'est-à-dire soit les valeurs DR soit les valeurs DB selon la ligne considérée. La mémoire 235 permet de séparer dans le temps le traitement des valeurs de luminance et le traitement des valeurs du signal de différence de couleurs. A l'entrée de la mémoire 235 les valeurs de luminance et de différence de couleurs pour deux lignes successives se présentent dans l'ordre suivant :

Y, DR, Y, Y, Y, DR, Y, Y, ...
Y, DB, Y, Y, Y, DB, Y, Y, ...

La sortie de la mémoire 235 fournit successivement, à l'entrée du dispositif de transformation 236 :

Y, Y, Y, Y, Y, Y, ...
DR, DR, ...
Y, Y, Y, Y, Y, Y, ...
DB, DB, ...

Le calcul des transformées des valeurs de luminance et des valeurs de différence de couleur est réalisé séparémment dans le temps, par blocs de seize valeurs et par blocs de huit valeurs respectivement. Les valeurs d'un bloc de valeurs de luminance correspondent à des segments de seize lignes d'image consécutives. Les valeurs d'un bloc de valeurs de différence de couleur rouge correspondent à huit lignes, c'est-à-dire une ligne sur deux du bloc des valeurs de luminance. Les valeurs d'un bloc de valeurs de différence de couleur bleue correspondent aux huit autres lignes du même bloc des valeurs de luminance.

La mémoire 235 possède une entrée de commande reliée à une sortie des moyens de commande 241 pour commander ces opérations d'écriture et de lecture. Le dispositif de transformation 236 possède une entrée de commande reliée à une sortie des moyens de commande 241 fournissant un signal logique T indiquant la taille du bloc à traiter. Une sortie du dispositif 236 est reliée à une entrée des deux mémoires vives 238. Le dispositif de transformation 237 possède une entrée et une sortie reliées respectivement à une sortie des mémoires 238 et à une entrée du dispositif de codage 239, et possède une entrée de commande reliée à la sortie des moyens de commande 241 fournissant le signal T.

Les deux mémoires vives 238 possèdent une entrée de commande reliée à une sortie des moyens de commande 241. Une sortie du dispositif de codage 239 est reliée à une borne de sortie 240 qui constitue la sortie du dispositif de codage d'images.

Le dispositif 236 calcule les transformées cosinus des valeurs de luminance, par blocs mono-dimensionnels de seize valeurs, pour seize lignes successivement, en alternant avec le calcul des transformées cosinus par blocs mono-dimensionnels de huit valeurs pour les signaux de différence de couleurs correspondant à ces seize lignes. Après le stockage des transformées correspondant à seize lignes d'image, les deux mémoires 238 restituent ces valeurs en les appliquant à l'entrée du dispositif 237 qui calcule les transformées cosinus bi-dimensionnelles à partir des valeurs transformées mono-dimensionnelles de seize lignes, pour les valeurs de luminance, et de huit lignes pour les valeurs de différence de couleurs.

L'une des mémoires 238 est utilisée en écriture, en écrivant toutes les valeurs correspondant à une ligne, puis toutes les valeurs correspondant à la ligne suivante, etc. jusqu'à la 16ième ligne, pour constituer une matrice à 16 lignes et 16 colonnes ; alors que l'autre mémoire est utilisée en lecture, en lisant toutes les valeurs de la première colonne, puis toutes les valeurs de la seconde colonne, etc., jusqu'à la 16ième colonne.

Les valeurs de luminance Y étant fournies en premier par la sortie de la mémoire 235, les transformées mono-dimensionnelles des valeurs de luminance sont stockées en premier dans l'une des mémoires 238. Leurs transformées bi-dimensionnelles sont déterminées en premier. Ensuite sont déterminées les transformées bi-dimensionnelles d'un bloc de valeurs de différence de couleur rouge, puis les transformées bi-dimensionnelles d'un bloc de valeurs de différence de couleur bleue.

Les moyens de commande 241 fournissent l'ensemble des signaux d'horloge synchronisant le dispositif de codage d'images et fournissent les signaux de commande de lecture et d'écriture de la mémoire 235 et des deux mémoires vives 238. La réalisation de ces moyens de commande 241 et de ces mémoires 235 et 238 est à la portée de l'homme de l'art. Les dispositifs de transformation cosinus mono-dimensionnelle 236 et 237 peuvent être réalisés conformément à l'exemple décrit précédemment et représenté à la figure 18.

Le dispositif de codage 239 a pour fonction de réduire la quantité d'informations à transmettre il peut être réalisé conformément à la description donnée par :

IEEE Transactions on Communications, VOL.COM-32, N° 3, March 1984, "Scene Adaptive Coder" de WEN-HSIUNG CHEN et WILLIAM K. PRATT

Ce codage consiste à comparer la valeur de chaque transformée par rapport à une valeur de seuil ; à considérer comme nulles les transformées inférieures à la valeur de seuil ; à transmettre la valeur des transformées non nulles par un code de Huffman et à transmettre les adresses de ces transformées dans leurs matrices par un codage par plages, la longueur des plages étant codée elle-même par un codage de Huffman. Seule la première valeur, F(0,0), de la matrice des transformées est transmise en valeur absolue.

La formule (2) de calcul d'une transformée cosinus inverse bi-dimensionnelle peut être mise sous la forme :

$$f(i,j) = \sum_{u=0}^{N-1} c(u).\, a_{iu} \left[ \sum_{v=0}^{N-1} c(v) . F_b(u,v) . a_{jv} \right]$$

$$= \sum_{u=0}^{N-1} b_{iu} . f(u)$$

F(i,j) est donc égale à la transformée inverse mono-dimensionnelle d'un bloc de valeurs f(0), ... , f(N-1) où f(u) est la transformée mono-dimensionnelle inverse d'un bloc de valeurs $F_b(u,o)$, ... , $F_b(u, N-1)$.

La figure 23 représente le schéma synoptique d'un exemple de réalisation d'un dispositif de décodage d'images, selon l'invention, comportant deux dispositifs de calcul de transformées cosinus inverses mono-dimensionnelles, selon l'invention. Ce dispositif de décodage comporte : un dispositif de décodage 256 ; deux dispositifs de calcul de transformées cosinus inverses mono-dimensionnelles, 246 et 247 ; deux mémoires vives 248, la capacité de chacune correspondant à seize lignes ; une mémoire vive 249, dont la capacité correspond à une ligne d'image ; un dispositif 250 d'interpolation verticale ; un dispositif 251 de restitution ; et des moyens de commande 252.

Une borne d'entrée 245 reçoit une suite de valeurs numériques codées fournies par un dispositif de codage d'image tel que celui représenté à la figure 22 et les applique à une entrée du dispositif de décodage 256. Le dispositif 246 de calcul de transformées cosinus inverses possède une entrée reliée à une sortie du dispositif 256 de décodage, une entrée de commande reliée à une sortie des moyens de commande 252 fournissant un signal logique T', et une sortie reliée à une entrée des deux mémoires vives 248.

Le dispositif de calcul de transformées inverses 247 possède une entrée reliée à une sortie des deux mémoires vives 248, une sortie reliée à une entrée de la mémoire 249, et une entrée de commande reliée à la sortie des moyens 252 fournissant le signal T'. Les mémoires 248 possèdent en outre une entrée de commande reliée à une sortie des moyens de commande 252. La mémoire 249 possède deux sorties reliées respectivement à deux entrées du dispositif d'interpolation verticale 250 et possède une entrée de commande reliée à une sortie des moyens de commande 252. Le dispositif 250 possède deux sorties reliées respectivement à deux entrées du dispositif de restitution 251. Ce dernier possède trois sorties reliées à trois bornes de sortie 253, 254, et 255 du dispositif de décodage d'images.

Les valeurs reçues par la borne d'entrée 245 sont décodées par le dispositif de décodage 256 pour reconstituer des valeurs de transformées cosinus bi-dimensionnelles. Les dispositifs 246 et 247 réalisent successivement deux transformations cosinus inverses mono-dimensionnelles. Pour chaque suite de 16 lignes d'image ils traitent successivement un bloc de 16 x 16 valeurs de transformées de luminance, puis deux blocs de 8 x 8 valeurs de transformées de différence de couleurs, etc... Les deux mémoires vives 248 sont utilisées alternativement en écriture et en lecture pour stocker, sous la forme de matrices de 16 x 16 valeurs ou de matrices de 8 x 8, les valeurs des transformées inverses mono-dimensionnelles calculées par le dispositif 246 pour 16 lignes d'image.

Les valeurs calculées par le dispositif 246 sont inscrites dans l'une des mémoires 248 et constituent chaque ligne de ces matrices successivement. Puis ces valeurs sont lues et appliquées au dispositif 247, en lisant les valeurs de chaque colonne successivement, pour calculer des valeurs transformées inverses bi-dimensionnelles. Ces valeurs des transformées bi-dimensionnelles sont stockées dans la mémoire 249 puis y sont lues dans l'ordre suivant :

$$Y, DR, Y, Y, Y, DR, Y, Y, \text{etc} ...$$
$$Y, DB, Y, Y, Y, DB, Y, Y, \text{etc} ...$$

Pour chaque triplet de points d'image la mémoire 249 restitue successivement trois valeurs de luminance Y et une valeur de différence de couleur DR ou DB selon la ligne considérée. Ces valeurs sont appliquées au dispositif d'interpolation verticale 250 qui calcule par interpolation une valeur de différence de couleur rouge DR et une valeur de différence de couleur bleue DB pour chaque point d'image. Ces valeurs de différence de couleur sont ensuite combinées avec les valeurs de luminance Y par le dispositif de restitution 51 pour déterminer trois valeurs de signaux de couleur qui sont reconverties en trois signaux analogiques : R, V, et B, appliqués aux bornes de sortie 253, 254, et 255 du dispositif de décodage d'images.

Les moyens de commande 252 fournissent des signaux d'horloge à l'ensemble du dispositif par des liaisons non représentées sur la figure. La réalisation des moyens 252 est à la portée de l'homme de l'art, de même que la réalisation des mémoires 248 et 249. Le dispositif de décodage 256 est décrit dans le document cité précédemment pour le dispositif de codage.

Les dispositifs de calcul de transformées mono-dimensionnelles selon l'invention peuvent être appliqués dans tous les cas où il est nécessaire de calculer rapidement et au moindre coût des transformées cosinus mono-dimensionnelles ou bi-dimensionnelles. Ces dispositifs peuvent être appliqués par exemple dans les systèmes de transmission ou de stockage d'images de télévision en couleur, par exemple les magnétoscopes numériques.

**Revendications**

1. Dispositif de calcul de transformées cosinus mono-dimensionnelles directes, par bloc de N valeurs, N étant égal à 8 ou 16, recevant sur une entrée (101 ou 161) une suite de valeurs à transformer, avec une valeur f(i) par période constante T0, et fournissant sur une sortie (104 ou 164) avec la même période T0, une suite de transformées directes,

$$F(k) = \frac{2}{N} \cdot c(k) \sum_{i=0}^{N-1} a_{ik} \cdot f(i) \qquad \text{pour } k = 0 \text{ à } N-1$$

$$\text{où } c(k) = \frac{1}{\sqrt{2}} \text{ pour } k = 0$$

$$c(k) = 1 \text{ pour } k = 1, 2, ... , N-1$$

$$a_{ik} = \cos\frac{(2i+1).k.\pi}{2}$$

caractérisé en ce qu'il comporte :

– une pluralité de dispositifs de calcul (A1 à A5) d'un premier type, ayant chacun une entrée d'opérandes recevant des suites de M valeurs $x_i$, pour $i = 0$ à M-1, M étant un nombre entier inférieur ou égal à N, ayant une entrée de commande, ayant M mémoires pour stocker une suite de M valeurs en M périodes successives, et ayant une sortie fournissant des suites de M valeurs $y_j$ pour $j = 0$ à M-1 pendant les M périodes suivantes et telles que: $y_j = x_i + x_k$ ou $y_j = x_i - x_k$ avec i et k compris entre 0 et M-1, en fonction d'une suite de signaux de commande appliqués sur l'entrée de commande; l'entrée (101 ou 161) du dispositif de calcul de transformées étant reliée à l'entrée d'opérandes d'un dispositif de calcul du premier type (A4 ou A1);

– une pluralité de dispositifs de calcul (PM1, PM4) d'un second type, ayant chacun une entrée d'opérandes recevant des suites constituées de deux valeurs consécutives $x_1$ et $x_2$ pendant deux périodes consécutives, ayant une entrée de commande, et ayant une sortie fournissant pendant les périodes suivantes une suite de valeurs:

$$z_1 = d_1 \cdot x_1 + d_2 \cdot x_2 \text{ et } z_2 = d_3 \cdot x_1 + d_4 \cdot x_2.$$

où $d_1$ à $d_4$ sont des nombres réels prédéterminés et fonctions d'une suite de signaux de commande appliqués à l'entrée de commande; la sortie (104 ou 164) du dispositif de calcul de transformées étant reliée à la sortie d'un dispositif de calcul du second type (PM3 ou PM1);

– un dispositif de couplage (102 ou 162) ayant une pluralité d'entrées couplées respectivement aux sorties des dispositifs de calcul (A1 à A5, PM1 à PM4), une pluralité de sorties couplées respectivement aux entrées d'opérandes des dispositifs de calcul (A1 à A5, PM1, PM4) et ayant une entrée de commande recevant une suite de signaux de commande;

– des moyens de commande (103 à 163) fournissant aux entrées de commande des dispositifs de calcul (A1 à A4 et PM4, PM5) et du dispositif de couplage (102 à 162), des suites de signaux de commande ayant une période N • $T0$, telles que le dispositif de couplage (102 ou 162) relie tous les dispositifs de calcul (A1 à A5 et PM1, PM4) en série entre l'entrée (101 ou 161) et la sortie (104 ou 164) du dispositif de calcul de transformées, dans un ordre variable tel que chaque valeur de la suite fournie par la sortie du dispositif de calcul de transformées soit égale à:

$$F(k) \text{ pour } k = 0 \text{ à } N-1$$

2. Dispositif de calcul de transformées cosinus selon la revendication 1, par blocs de 8 valeurs, caractérisé en ce qu'il comporte deux dispositifs de calcul du premier type : A4 et A5, et deux dispositifs de calcul du second type : PM3 et PM5 ; et en ce que les moyens de commande (103) commandent le dispositif de couplage (102) pour réaliser successivement les liaisons mentionnées dans le tableau ci-dessous, les valeurs transmises par le dispositif de couplage (102) vers le dispositif A5 étant affectées d'un retard T4 = 2.T0 lorsque la liaison transmettant ces valeurs est repérée par - A5(T4) dans ce tableau :

| nombre de périodes T0 (modulo 8) | Liaisons |
|---|---|
| 1 | A4–A5(T4) |
| 2 | |
| 3 | |
| 4 | |
| 5 | A4–PM4 |
| 6 | |
| 7 | A4–A5(T4) et PM4–A5 |
| 8 | |

3. Dispositif de calcul de transformées cosinus selon la revendication 1, par blocs de 16 valeurs, caractérisé en ce qu'il comporte trois dispositifs du premier type : A1, A2, A3 et deux dispositifs du second type : PM1, PM2 ; et en ce que les moyens de commande (163) commandent le dispositif de couplage (162) pour réaliser successivement les liaisons mentionnées dans le tableau ci-dessous, les valeurs transmises par le dispositif de couplage (162) vers les dispositifs A1, A2, A3, étant affectées respectivement d'un retard T1 = 16.T0 , ou T2 = 2.T0 , ou T3 = 14.T0, lorsque la liaison transmettant ces valeurs est repérée respectivement par - A2(T1), - A3(T2) et - A2(T3) dans le tableau ci-dessous :

| nombre de périodes T0 (modulo 16 ) | Liaisons |
|---|---|
| 1 | A1–A2–PM2 |
| 2 | |
| 3 | A1–A2–A3(T2) et PM2–A3 |
| 4 | |
| 5 | A1–A2–A3(T2) |
| 6 | |
| 7 | A1–A2–PM2 |
| 8 | |
| 9 | A1–PM2–A3 et A2–A3(T2) |
| 10 | |
| 11 | A1–PM2–A2(T3)–A3(T2) |
| 12 | |
| 13 | A1–A2(T1)–PM2–A2(T3)–A3(T2) |
| 14 | |
| 15 | A1–A2(T1)–A3(T2) et PM2–A3 |
| 16 | |

4. Dispositif de calcul de transformées cosinus mono-dimensionnelles inverses, par blocs de N valeurs, N étant égal à 8 ou 16, recevant sur une entrée (131 ou 191) une suite de valeurs transformées directes, avec une valeur F(k) par période constante T0, et fournissant sur une sortie (134 ou 194) avec la même période T0 une suite de transformées inverses,

$$f(i) = \sum_{k=0}^{N-1} b_{ki} \cdot F(k) \qquad \text{pour } i = 0 \text{ à } N-1$$

$$\text{avec} \qquad b_{ik} = c(k) \cdot \cos \frac{(2i+1).k.\pi}{2N}$$

et où F(k), pour k = 0 à N-1, est un bloc de N valeurs à transformer, caractérisé en ce qu'il comporte:

– une pluralité de dispositifs de calcul A1′ à A5′) recevant des suites de M valeurs $x_i$, pour i = 0 à M-1, M étant un nombre entier inférieur ou égal à N, ayant une entrée de commande, ayant M mémoires pour stocker une suite de M valeurs en M périodes successives et ayant une sortie fournissant des suites de M valeurs $y_j$ pour j = 0 à M-1 pendant les M périodes suivantes et telles que:

$y_j = x_i + x_k$ ou $y_j = x_i - x_k$ avec i et k compris entre 0 et N-1, en fonction d'une suite de signaux de commande appliqués sur l'entrée de commande; la sortie (134 ou 194) du dispositif de calcul de transformées inverses étant reliée à la sortie d'un dispositif de calcul du premier type (A1′ ou A1′);

– une pluralité de dispositifs de calcul (PM1′, PM4′) d'un second type, ayant chacun une entrée d'opérandes recevant des suites constituées de deux valeurs consécutives $x_1$ et $x_2$ pendant deux périodes consécutives, ayant une entrée de commande, et ayant une sortie fournissant pendant les deux périodes suivantes des valeurs:

$$z_1 = d_1 \cdot x_1 + d_2 \cdot x_2 \text{ et } z_2 = d_3 \cdot x_1 + d_4 \cdot x_2$$

où $d_1$ à $d_4$ sont des nombres réels prédéterminés et fonctions d'une suite de signaux de commande appliqués à l'entrée de commande; l'entrée (131 ou 191) du dispositif de calcul de transformées inverses étant reliée à l'entrée d'opérandes d'un dispositif de calcul du premier type (PM1′ ou PM3′);

– un dispositif de couplage (132 ou 192) ayant une pluralité d'entrées couplées respectivement aux sorties des dispositifs de calcul (A1′ à A5′, PM1′, PM4′), une pluralité de sorties couplées respectivement aux entrées d'opérandes des dispositifs de calcul (A1′ à A5′, PM1′ à PM4′) et ayant une entrée de commande recevant une suite de signaux de commande;

– des moyens de commande (133 ou 193) fournissant respectivement aux entrées de commande des dispositifs de calcul (A1′ à A5′ et PM4′ à PM5′) et du dispositif de couplage (132 ou 192), des suites de signaux de commande ayant une période N • T0, telles que le dispositif de couplage (132 ou 192) relie tous les dispositifs de calcul (A1′ à A5′ et PM1′ à PM4′) en série entre l'entrée (131 ou 191) et la sortie (134 ou 194) du dispositif de calcul de transformées inverses, dans un ordre variable et tel que chaque va-

32

leur de la suite fournie par la sortie du dispositif de calcul de transformées inverses soit égale à: $f(i)$, pour $i = 0$ à N-1.

5. Dispositif de calcul de transformées selon la revendication 4, par blocs de 8 valeurs, caractérisé en ce qu'il comporte deux dispositifs de calcul du premier type : A4' et A5', et deux dispositifs de calcul du second type : PM3' et PM5' ; et en ce que les moyens de commande (133) commandent le dispositif de couplage (132) pour réaliser successivement les liaisons mentionnées dans le tableau ci-dessous, les valeurs transmises par le dispositif de couplage (132) vers le dispositif A4' étant affectées d'un retard T4' = 2.T0, lorsqu'une liaison est repérée par - A4'(T4') dans ce tableau :

| nombre de périodes d'horloge (modulo 8) | Liaisons |
|---|---|
| 1 | A5'–PM4' |
| 2 | |
| 3 | A5'–A4'(T4') et PM4'–A4' |
| 4 | |
| 5 | A5'–A4'(T4') |
| 6 | |
| 7 | |
| 8 | |

6. Dispositif de calcul de transformées selon la revendication 4, par blocs de 16 valeurs, caractérisé en ce qu'il comporte trois dispositifs du premier type : A1', A2', A3' et deux dispositifs du second type: PM1', PM2' ; et en ce que les moyens de commande (163) commandent le dispositif de couplage (162) pour réaliser successivement les valeurs transmises les liaisons mentionnées dans le tableau ci-dessous, les valeurs transmises par le dispositif de couplage (162) vers les dispositifs A1', A2', PM2', étant affectées respectivement d'un retard T1 = 8.T0, ou T2 = 2.T0, ou T3 = 7.T0, lorsque la liaison transmettant ces valeurs est repérée respectivement par - A1'(T1'), - A2'(T2') et - PM2'(T3') dans le tableau ci-dessous :

| nombre de périodes d'horloge (modulo 16) | Liaisons |
|---|---|
| 1 | A3'–PM2' et A2'–A1'(T1') |
| 2 | |
| 3 | A3'–A2'(T2')–A1'(T1') et PM2'–A2' |
| 4 | |
| 5 | A3'–A2'(T2')–PM2'(T1')–A1' |
| 6 | |
| 7 | A3'–PM2'–A1' et A2'–PM2'(T1') |
| 8 | |
| 9 | A3'–A2'(T2')–A1' et PM2'–A2' |
| 10 | |
| 11 | A3'–A2'(T2')–A1' |
| 12 | |
| 13 | A3'–PM2' et A2'–A1' |
| 14 | |
| 15 | A3'–A2'(T2')–PM2'–A2'–A1' |
| 16 | |

7. Dispositif de codage d'images, par une transformation cosinus directe bi-dimensionnelles, caractérisé en ce qu'il comporte deux dispositifs de calcul de transformées cosinus directes mono-dimensionnelles (236, 237) selon la revendication 1, couplés à deux mémoires vives (238).

8. Dispositif de décodage d'images, par une transformation cosinus inverse bi-dimensionnelle, caractérisé en ce qu'il comporte deux dispositifs de calcul de transformées cosinus inverses mono-dimensionnelles (246, 247) selon la revendication 4, couplés à deux mémoires vives (248).

33

## Claims

1. A device for the calculation of monodimensional direct cosine transforms, in a block of N values, N being equal to 8 or 16, receiving at an input (101 or 161) a sequence of values to be transformed, with a value (f(i) in a constant period T0, and supplying at an output (104 or 164) with the same period T0, a sequence of direct transforms,

$$F(k) = (2/N) \cdot c(k) \sum_{i=0}^{N-1} a_{ik} \cdot f(i) \qquad \text{for } k = 0 \text{ to } N-1$$

$$\text{wherein } c(k) = (1/\sqrt{2}) \text{ for } k = 0$$

$$c(k) = 1 \text{ for } k = 1, 2, \ldots, N-1$$

$$a_{ik} = \cos\frac{(2i+1) \cdot k \cdot \pi}{2}$$

characterized in that it comprises:
— a plurality of calculating devices (A1 through A5) of a first type, each having an operand input receiving sequences of M values $x_i$, for $i = 0$ to M-1, M being a whole number less than or equal to N, having a control input, having M memories in order to store a sequence of M values in M successive periods, and having an output supplying sequences of M values $y_j$ for $j = 0$ to M-1 during the M following periods and such that: $y_j = x_i + x_k$ or $y_j = x_i - x_k$ with i and k being between 0 and M-1, as a function of a sequence of control signals applied to the control input; the input (101 or 161) of the transform calculating device being connected with the operand input of a calculating device of the first type (A4 or A1);
— a plurality of calculating devices (PM1 and PM4) of a second type, each having an operand input receiving sequences made up of two consecutive values $x_1$ and $x_2$ during two consecutive periods, having a control input, and having an output supplying during the two following periods a sequence of values:

$$z_1 = d_1 \cdot x_1 + d_2 \cdot x_2 \text{ and } z_2 = d_3 \cdot x_1 + d_4 \cdot x_2,$$

wherein $d_1$ through $d_4$ are predetermined real numbers and functions of a sequence of control signals applied to the control input; the output (104 or 106) of the transform calculating device being connected with the output of a calculating device of the second type (PM3 or PM1);
— a coupling device (102 or 162) having a plurality of inputs respectively coupled with the outputs of the calculating devices (A1 through A5, PM1 through PM4), a plurality of outputs respectively coupled with the operand inputs of the calculating devices (A1 through A5, PM1 and PM4) and having a control input receiving a sequence of control signals;
— control means (103 through 106) supplying the control inputs of the calculating devices (A1 through A5, PM4 and PM5) and of the coupling device (102 and 162) with sequences of control signals having a period N • T0 such that the coupling device (102 or 162) connects all the calculating devices (A1 through A5, PM1 and PM4) in series with the input (101 or 161) and the output (104 or 164) of the transform calculating device in a variable order such that each value of the sequence furnished by the output of the transform calculating is equal to:

$$F(k) \text{ for } k = 0 \text{ to } N-1.$$

2. A cosine transform calculating device as claimed in claim 1, in blocks of 8 values, characterized in that it comprises two calculating devices of the first type: A4 and A5, and two calculating devices of the second type: PM3 and PM5; and in that the control means (103) control the coupling device (102) in order to successively produce the connections specified in the table below, the values transmitted by the coupling device (102) to the device A5 being subject to a delay T4 equal to 2 • T0 when the connection transmitting the values is denoted — A5(T4) in this table:

| number of periods T0 (modulo 8) | connections |
|---|---|
| 1 | A4–A5(T4) |
| 2 | |
| 3 | |
| 4 | |
| 5 | A4–PM4 |
| 6 | |
| 7 | A4–A5(T4) and PM4–A5 |
| 8 | |

3. A device for the calculating of cosine transforms as claimed in claim 1, in blocks of 16 values, characterized in that it comprises three devices of the first type: A1, A2 and A3 and two devices of the second type: PM1 and PM2; and in that the control means (163) control the coupling means (162) for successively producing the connections given in the table below, the values transmitted by the coupling device (162) to the devices A1, A2 and A3 being subject to a respective delay of T1 equal 16 • T0, or T2 equal to 2 • T0 or T3 equal to 14 • T0, when the connection transmitting these values is denoted respectively – A2(T1), –A3(T2) and – A2(T3) in the table below:

| number of periods T0 (modulo 16) | connections |
|---|---|
| 1 | A1–A2–PM2 |
| 2 | |
| 3 | A1–A2–A3(T2) and PM2–A3 |
| 4 | |
| 5 | A1–A2–A3(T2) |
| 6 | |
| 7 | A1–A2–PM2 |
| 8 | |
| 9 | A1–PM2–A3 and A2–A3(T2) |
| 10 | |
| 11 | A1–PM2–A2(T3)–A3(T2) |
| 12 | |
| 13 | A1–A2(T1)–PM2–A2(T3)–A3(T2) |
| 14 | |
| 15 | A1–A2(T1)–A3(T2) and PM2–A3 |
| 16 | |

4. A device for calculating inverse monodimensional cosine transforms, in blocks of N values, N being equal to 8 or 16, receiving at one input (131 or 191) a sequence of direct transformed values, with a value F(k) in a constant period T0 and supplying at an output (134 or 194) in the same period T0 a sequence of inverse transforms,

$$f(i) = \sum_{k=0}^{N-1} b_{ik} \cdot F(k) \qquad \text{for } i = 0 \text{ to } N-1$$

$$\text{with } b_{ik} = c(k) \cdot \cos \frac{(2i+1) \cdot k \cdot \pi}{2N}$$

and wherein, for k = 0 to N-1, F(k) is a block of N values to be transformed, characterized in that it comprises:
- a plurality of calculating devices (A1' to A5') of a first tyype each having an operand input receiving sequences of M values $x_i$, for 1 = 0 to M-1, M being a whole number less than or equal to N, having a control input, having M memories in order to store a sequence of M values in M successive periods and having an output supplying sequences of M values $y_j$ for j = 0 to M-1 during the following M periods and such that:

$y_j = x_i + k_k$ or $y_j = x_i - x_k$ with i and k comprised between 0 and N-1, as a function of a sequence of control signals applied to the control input; the output (134 or 194) of the device for calculating inverse transforms being connected to the output of a calculating device of the first type (A1' or A1');
- a plurality of calculating devices (PM1' and PM4') of a second type each having an operand input receiving sequences constituted by two consecutive values, $x_1$ and $x_2$ during two consecutive periods, and having a control input, and having an output supplying, during the two following periods, the values:

$$z_1 = d_1 \cdot x_1 + d_2 \cdot x_2 \text{ and } z_2 = d_3 \cdot x_1 + d_4 \cdot x_2,$$

wherein $d_1$ to $d_4$ are predetermined real numbers which are functions of a sequence of control signals applied to the control input: the input (131 or 191) of the inverse transform calculating device being connected to the operand input of a calculating device of the first type (PM1' or PM3');
- a coupling device (132 or 192) having a first plurality of inputs coupled respectively with the outputs of the calculating devices (A1' to A5', PM1' and PM4'), a plurality of outputs coupled respectively with the operand inputs of the calculating devices (A1' to A5' and PM1' to PM4') and having a control input receiving a sequence of control signals;
- control means (133 or 193) respectively supplying the control inputs of the calculating devices (A1' through A5' and PM4' through PM5') and of the coupling device (132 or 192) with control signal sequences having a period N • T0 such that the coupling device (132 or 192) connects all the calculating devices (A1' through A5' and PM1' through PM4') in series between the input (131 or 191) and the output (134 or 194) of the inverse transform calculating device, in a variable order such that each value of the sequence supplied by the output of the inverse transform calculating device is equal to: f(i) for i = 0 to N-1.

5. The transform calculating device as claimed in claim 4 in blocks of 8 values, characterized in that it comprises two calculating devices of the first type: A4' and A5', and two calculating devices of the second type: PM3' and PM5'; and in that the control means (133) control the coupling device (132) in order to successively produce the connections mentioned in the table below, the values transmitted by the coupling device (132) to the device A4' being subject to a delay T4' of 2 • T0 when a connection is labeled A4'(T4') in this table:

| number of clock periods (modulo 8) | connections |
|---|---|
| 1 | A5'–PM4' |
| 2 | |
| 3 | A5'–A4'(T4') and PM4'–A4' |
| 4 | |
| 5 | A5'–A4'(T4') |
| 6 | |
| 7 | |
| 8 | |

6. The device for calculating transforms as claimed in claim 4, in blocks of 16 values, characterized in that it comprises three devices of the first type: A1', A2' and A3' and two devices of the second type: PM1' and PM2'; and in that the control means (163) control the coupling device (162) in order to successively produce the values transmitted the connections mentioned in the table below, the values transmitted by the coupling device (162) to the devices A1', A2' and PM2' being respectively subject to a delay T1 equal to 8 • T0, or T2 equal to 2 • T0 or T3 equal to 7 • T0, when the connection transmitting these values is denoted respectively – A1'(T1'), – A2'(T2') and – PM2'(T3') in the table given below:

36

| number of clock periods (modulo 16) | connections |
|---|---|
| 1 | A3′–PM2′ and A2′–A1′(T1′) |
| 2 | |
| 3 | A3′–A2′(T2′)–A1′(T1′) and PM2′–A2′ |
| 4 | |
| 5 | A3′–A2′(T2′)–PM2′(T1′)–A1′ |
| 6 | |
| 7 | A3′–PM2′–A1′ and A2′–PM2′(T1′) |
| 8 | |
| 9 | A3′–A2′(T2′)–A1′ and PM2′–A2′ |
| 10 | |
| 11 | A3′–A2′(T2′)–A1′ |
| 12 | |
| 13 | A3′–PM2′ and A2′–A1′ |
| 14 | |
| 15 | A3′–A2′(T2′)–PM2′–A2′–A1′ |
| 16 | |

7. A device for encoding images by a direct bidimensional cosine transformation, characterized in that it comprises two monodimensional direct cosine transform calculating devices (236 and 237) as claimed in claim 1 coupled with the RAMs (238).

8. A device for decoding images by a bidimensional inverse cosine transformation, characterized in that it comprises two monodimensional inverse cosine transform calculating devices (246 and 247) as claimed in claim 4 coupled with two RAMs (248).

**Patentansprüche**

1. Recheneinrichtung für eindimensionale direkte Kosinustransformierte, aus Blöcken von N Werten mit N = 8 oder 16, die an einem Eingang (101 oder 161) eine Folge von zu transformierenden Werten, mit einem Wert f(i) pro konstanter Periode T0, empfängt und an einen Ausgang (104 oder 164) mit der gleichen Periode T0 eine Folge von direkt Transformierten liefert,

$$F(k) = 2/N \cdot c(k) \cdot \Sigma_i a_{ik} \cdot f(i) \text{ für } i, k = 0 \text{ bis } N\text{-}1,$$

wobei

$$c(k) = 1/\sqrt{2} \text{ für } k = 0,$$
$$c(k) = 1 \text{ für } k = 1, 2, ..., N\text{-}1 \text{ und}$$
$$a_{ik} = \cos(((2i + 1) \cdot k \cdot p)/2)$$

dadurch gekennzeichnet, daß sie umfaßt:

– eine Mehrzahl von Recheneinrichtungen (A1 bis A5) einer ersten Bauart, mit jeweils einem Operandeneingang, der Folgen von M Werten $x_i$ mit i = 0 bis M-1 und M ganze Zahl kleiner oder gleich N, mit einem Steuereingang, mit M Speichern zum Speichern einer Folge von M Werten in M aufeinanderfolgenden Perioden und mit einem Ausgang, der in Abhängigkeit einer Folge von an den Steuereingang eingegebenen Steuersignalen während der M folgenden Perioden Folgen von M Werten $y_j$ mit j = 0 bis M-1, derart daß $y_j = x_i + x_k$ oder $y_j = x_i - x_k$, mit i und k zwischen 0 und M-1, liefert, wobei der Eingang (101 oder 161) der Recheneinrichtung für die Transformierten mit dem Operandeneingang einer Recheneinrichtung der ersten Bauart (A4 oder A1) verbunden ist;

– eine Mehrzahl von Recheneinrichtungen (PM1 bis PM4) einer zweiten Bauart, mit jeweils einem Operandeneingang, der während zwei aufeinanderfolgenden Perioden aus zwei aufeinanderfolgenden Werten $x_1$ und $x_2$ gebildete Folgen empfängt, mit einem Steuereingang und mit einem Ausgang, der während der zwei folgenden Perioden die Folge von Werten $z_1 = d_1 x_1 + d_2 x_2$ und $z_2 = d_3 x_1 + d_4 x_2$ liefert, wobei $d_1$ bis $d_4$ vorgegebene reelle Zahlen sind, die von einer Folge von an den Steuereingang gegebenen Steuersignalen abhängen, wobei der Ausgang (104 oder 164) der Recheneinrichtung für die Transformierten mit dem Ausgang einer Recheneinrichtung der zweiten Bauart (PM3 oder PM1) verbunden ist;

– eine Kopplungseinrichtung (102 oder 162) mit einer Mehrzahl von mit den jeweiligen Ausgängen der Recheneinrichtungen (A1 bis A5, PM1 bis PM4) gekoppelten Eingängen, mit einer Mehrzahl von mit den jeweiligen Operandeneingängen der Recheneinrichtungen (A1 bis A5, PM1 bis PM4) gekoppelten Ausgängen und mit einem Steuereingang, der eine Folge von Steuersignalen empfängt;
- Steuermittel (103 oder 183), die an die Steuereingänge der Recheneinrichtungen (A1 bis A5 und PM1 bis PM4) und der Kopplungseinrichtung (102 oder 162) Folgen von Steuersignalen mit einer Periode N • T0 liefern, derart, daß die Kopplungseinrichtung (102 oder 162) sämtliche Recheneinrichtungen (A1 bis A5 und PM1 bis PM4) in einer variablen Reihenfolge zwischen dem Eingang (101 oder 161) und dem Ausgang (104 oder 164) der Recheneinrichtung für die Transformierten in Reihe schaltet, so daß jeder Wert der vom Ausgang der Recheneinrichtung für die Transformierten gelieferten Folge gleich

$$F(k), \text{ mit } k = 0 \text{ bis } N-1$$

ist.

2. Recheneinrichtung für Kosinustransformierten gemäß Anspruch 1, aus Blöcken von 8 Werten, dadurch gekennzeichnet, daß sie zwei Recheneinrichtungen der ersten Bauart (A4 und A5) und zwei Recheneinrichtungen der zweiten Bauart (PM3 und PM4) umfaßt und daß die Steuermittel (103) die Kopplungseinrichtung (102) steuern, um nacheinander die in der unten stehenden Tabelle genannten Verbindungen zu verwirklichen, wobei die durch die Kopplungseinrichtung (102) an die Recheneinrichtung (A5) übertragenen Werte T4 = 2 • T0 verzögert werden, wenn in dieser Tabelle die diese Werte übertragende Verbindung durch −A5(T4) gekennzeichnet ist:

| Anzahl der Perioden T0 (modulo 8) | Verbindungen |
|---|---|
| 1 | A4–A5(T4) |
| 2 | |
| 3 | |
| 4 | |
| 5 | A4–PM4 |
| 6 | |
| 7 | A4–A5(T4) und PM4–A5 |
| 8 | |

3. Recheneinrichtung für Kosinustransformierte gemäß Anspruch 1, aus Blöcken von 16 Werten, dadurch gekennzeichnet, daß sie drei Recheneinrichtungen der ersten Bauart (A1, A2, A3) und zwei Recheneinrichtungen der zweiten Bauart (PM1 und PM2) umfaßt und daß die Steuermittel (163) die Kopplungseinrichtung (162) steuern, um nacheinander die in der unten stehenden Tabelle genannten Verbindungen zu verwirklichen, wobei die durch die Kopplungseinrichtung (162) an die Recheneinrichtungen (A1, A2 und A3) übertragenen Werte um T1 = 16 • T0 bzw. T2 = 2 • T0 bzw. T3 = 14 • T0 verzögert werden, wenn die diese Werte übertragende Verbindung in der unten stehenden Tabelle durch − A2(T1) bzw. − A3(T2) bzw. − A2(T3) gekennzeichnet ist:

| Anzahl der Perioden T0 (modulo 16) | Verbindungen |
|---|---|
| 1<br>2 | A1–A2–PM2 |
| 3<br>4 | A1–A2–A3(T2) und PM2–A3 |
| 5<br>6 | A1–A2–A3(T2) |
| 7<br>8 | A1–A2–PM2 |
| 9<br>10 | A1–PM2–A3 und A2–A3(T2) |
| 11<br>12 | A1–PM2–A2(T3)–A3(T2) |
| 13<br>14 | A1–A2(T1)–PM2–A2(T3)–A3(T2) |
| 15<br>16 | A1–A2(T1)–A3(T2) und PM2–A3 |

4. Recheneinrichtung für eindimensionale inverse Kosinustransformierte, aus Blöcken von N Werten mit N = 8 oder 16, die an einem Eingang (131 oder 191) eine Folge von direkt transformierten Werten, mit einem Wert F(k) pro konstanter Periode T0, empfängt und an einen Ausgang (134 oder 194) mit der gleichen Periode T0 eine Folge von inversen Transformierten liefert,

$$f(i) = \Sigma_k\, b_{ki} \bullet F(k) \text{ für } i, k = 0 \text{ bis } N\text{-}1$$
$$\text{mit } b_{ki} = c(k) \bullet \cos(((2i + 1) \bullet K \bullet \pi)/2N)$$

wobei F(k) für k = 0 bis N-1 einen Block von N zu transformierenden Werten bildet, dadurch gekennzeichnet, daß sie umfaßt:

– eine Mehrzahl von Recheneinrichtungen (A1' bis A5') einer ersten Bauart, mit jeweils einem Operandeneingang, der Folgen von M Werten $x_i$ mit i = 0 bis M-1 und M ganze Zahl kleiner oder gleich N empfängt, mit einem Steuereingang, mit M Speichern zum Speichern einer Folge von M Werten während M aufeinanderfolgender Perioden und mit einem Ausgang, der während der M folgenden Perioden in Abhängigkeit einer Folge von an den Steuereingang gegebenen Steuersignalen Folgen von M Werten $y_j$ mit j = 0 bis M-1, derart, daß $y_j = x_i + x_k$ oder $y_j = x_i - x_k$, mit i und k zwischen 0 und N-1, liefert, wobei der Ausgang (134 oder 194) der Recheneinrichtung für die inversen Transformierten mit dem Ausgang einer Recheneinrichtung der ersten Bauart (A4' oder A1') verbunden ist;

– eine Mehrzahl von Recheneinrichtungen (PM1' bis PM4') einer zweiten Bauart, mit jeweils einem Operandeneingang, der während zwei aufeinanderfolgenden Perioden aus zwei aufeinanderfolgenden Werten $x_1$ und $x_2$ gebildete Folgen empfängt, mit einem Steuereingang und mit einem Ausgang, der während den zwei folgenden Perioden die Werte $z_1 = d_1x_1 + d_2x_2$ und $z_2 = d_3x_1 + d_4x_2$ liefert, wobei $d_1$ bis $d_4$ vorgegebene reelle Zahlen sind, die von einer Folge von an den Steuereingang eingegebenen Steuersignalen abhängen, wobei der Eingang (131 oder 191) der Recheneinrichtung für die inversen Transformierten mit dem Operandeneingang einer Recheneinrichtung der ersten Bauart (PM3' oder PM1') verbunden ist;

– eine Kopplungseinrichtung (132 oder 192) mit einer Mehrzahl von mit den jeweiligen Ausgängen der Recheneinrichtungen (A1' bis A5', PM1' bis PM4') verbundenen Eingängen, mit einer Mehrzahl von mit den jeweiligen Operandenausgängen der Recheneinrichtungen (A1' bis A5', PM1' bis PM4') verbundenen Ausgängen und mit einem Steuereingang, der eine Folge von Steuersignalen empfängt;

– Steuermittel (133 oder 193), die an die Steuereingänge der Recheneinrichtungen (A1' bis A5' und PM1' bis PM4') bzw. der Kopplungseinrichtung (132 oder 192) Folgen von Steuersignalen mit einer Periode N • T0 liefern, derart, daß die Kopplungseinrichtung (132 oder 192) in variabler Reihenfolge sämtlicher Recheneinrichtungen (A1' bis A5' und PM1' bis PM4') zwischen dem Eingang (131 oder 191) und dem Ausgang (134 oder 194) der Recheneinrichtung für die inversen Transformierten in Reihe schaltet, so daß jeder Wert der vom Ausgang der Recheneinrichtung für die inversen Transformierten gelieferten Folge gleich

$$f(i), \text{ mit } i = 0 \text{ bis } N\text{-}1,$$

ist.

6. Recheneinrichtung für die Transformierten gemäß Anspruch 4, aus Blöcken von 8 Werten, dadurch gekennzeichnet, daß sie zwei Recheneinrichtungen der ersten Bauart (A4' und A5') und zwei Recheneinrichtungen der zweiten Bauart (PM3' und PM4') umfaßt und daß die Steuermittel (133) die Kopplungseinrichtung (132) steuern, um nacheinander die in der unten stehenden Tabelle genannten Verbindungen zu verwirklichen, wobei die durch die Kopplungseinrichtung (132) an die Recheneinrichtung (A4') übertragenen Werte um T4' = 2 • T0 verzögert werden, wenn in dieser Tabelle eine Verbindung durch – A4'(T4') gekennzeichnet ist:

| Anzahl der Taktperioden des Taktgebers (modulo 8) | Verbindungen |
|---|---|
| 1 | A5'–PM4' |
| 2 | |
| 3 | A5'–A4'(T4') und PM4'–A4' |
| 4 | |
| 5 | A5'–A4'(T4') |
| 6 | |
| 7 | |
| 8 | |

6. Recheneinrichtung für die Transformierten gemäß Anspruch 4, aus Blöcken von 16 Werten, dadurch gekennzeichnet, daß sie drei Recheneinrichtungen der ersten Bauart (A1', A2' und A3') und zwei Recheneinrichtungen der zweiten Bauart (PM1' und PM2') umfaßt und daß die Steuermittel (193) die Kopplungseinrichtung (192) steuern, um nacheinander die in der unten stehenden Tabelle genannten Verbindungen zu verwirklichen, wobei die durch die Kopplungseinrichtung (192) an die Recheneinrichtungen (A1', A2' und PM2') übertragenen Werte um T1 = 8 • T0 bzw. T2 = 2 • T0 bzw. T3 = 7 • T0 verzögert werden, wenn die diese Werte übertragende Verbindung in der unten stehenden Tabelle durch – A1'(T1') bzw. – A2'(T2') bzw. – PM2'(T3') gekennzeichnet ist:

| Anzahl der Perioden des Taktgebers (modulo 16) | Verbindungen |
|---|---|
| 1 | A3'–PM2' und A2'–A1'(T1') |
| 2 | |
| 3 | A3'–A2'(T2')–A1'(T1') und PM2'–A2' |
| 4 | |
| 5 | A3'–A2'(T2')–PM2'(T1')–A1' |
| 6 | |
| 7 | A3'–PM2'–A1' und A2'–PM2'(T1') |
| 8 | |
| 9 | A3'–A2'(T2')–A1' und PM2'–A2' |
| 10 | |
| 11 | A3'–A2'(T2')–A1' |
| 12 | |
| 13 | A3'–PM2' und A2'–A1' |
| 14 | |
| 15 | A3'–A2'(T2')–PM2'–A2'–A1'. |
| 16 | |

7. Einrichtung zur Kodierung von Bildern mittels einer zweidimensionalen direkten Kosinustransformation, dadurch gekennzeichnet, daß sie zwei Recheneinrichtungen für die eindimensionalen direkten Kosinustransformierten (236, 237) gemäß Anspruch 1 umfaßt, die mit zwei spannungsführenden Speichern (238) verbunden sind.

8. Einrichtung zur Dekodierung von Bildern mittels einer zweidimensionalen inversen Kosinustransformation, dadurch gekennzeichnet, daß sie zwei Recheneinrichtungen für die eindimensionalen inversen Kosinustransformierten ( 246, 247) gemäß Anspruch 4 umfaßt, die mit zwei spannungsführenden Speichern (248) verbunden sind.

FIG_1

# FIG_2-a

$x_1$

$y_1 = x_1 + x_2$

$x_2$

# FIG_2-b

$x_1$

$x_2$

$y_2 = x_1 - x_2$

# FIG_2-c

$x_1$

$d_1$

$y_1 = d_1 . x_1 + d_3 . x_2$

$x_2$

$d_3$

# FIG_2-d

$x_1$

$d_1$

$y_1 = d_1 . x_1 + d_3 . x_2$

$d_3$

$x_2$

$d_4$

$d_2$

$y_2 = d_2 . x_1 + d_4 . x_2$

FIG_3

$S_i = \sin i \cdot \dfrac{\pi}{32}$     $C_i = \cos L \cdot \dfrac{\pi}{2}$

Temps
(Nombres de périodes
d'horloge)

EP 0 206 847 B1

FIG_4

EP 0 206 847 B1

FIG_5

FIG_7

FIG_6

FIG_8

# FIG_9

# FIG_12

# FIG_10

101

A4

DISPOSITIF DE CALCUL

103

MOYENS DE COMMANDE

102

105

RETARD T4

A5

DISPOSITIF DE CALCUL

PM4

DISPOSITIF DE CALCUL

PM3

DISPOSITIF DE CALCUL

104

# FIG_13

131

PM3'

DISPOSITIF DE CALCUL

133

MOYENS DE COMMANDE

A5'

DISPOSITIF DE CALCUL

132

135

RETARD T4'

PM4'

DISPOSITIF DE CALCUL

A4'

DISPOSITIF DE CALCUL

134

EP 0 206 847 B1

**FIG_11**

**FIG_14**

FIG_15

EP 0 206 847 B1

FIG_16

FIG_20

FIG_17

EP 0 206 847 B1

FIG_18

FIG_19

Temps

0

Temps
(Nombre de périodes d'horloge)

EP 0 206 847 B1

FIG_21

# FIG_22

# FIG_23